# EUROPEAN PATENT SPECIFICATION

(11) **EP 2 956 884 B1**
(45) Date of publication and mention of the grant of the patent: **09.09.2020**
(21) Application number: 14706728.4
(22) Date of filing: 06.02.2014
(51) Int. Cl.: G06F 21/56, G06N 5/04, G06F 21/55, H04L 29/06

(54) **ON-LINE BEHAVIORAL ANALYSIS ENGINE IN MOBILE DEVICE WITH MULTIPLE ANALYZER MODEL PROVIDERS**
ONLINE-VERHALTENSANALYSEMASCHINE IN EINER MOBILEN VORRICHTUNG MIT MEHREREN ANALYSEMODELLANBIETERN
MOTEUR D'ANALYSE DE COMPORTEMENT EN LIGNE DANS UN DISPOSITIF MOBILE AVEC DES FOURNISSEURS DE MODÈLES D'ANALYSEUR MULTIPLES

(30) Priority: 15.02.2013 US 201361765461 P; 09.07.2013 US 201313937462
(43) Date of publication of application: 23.12.2015
(73) Proprietor: Qualcomm Incorporated, San Diego, CA 92121-1714 (US)
(72) Inventor: GUPTA, Rajarshi, San Diego, California 92121-1714 (US); BAPST, Mark, San Diego, California 92121-1714 (US); RESHADI, Mohammad Hossein, San Diego, California 92121-1714 (US); KUMAR, Samir, San Diego, California 92121-1714 (US)
(74) Representative: Wegner, Hans
(86) International application number: PCT/US2014/015088
(87) International publication number: WO 2014/126779

(56) References cited:
- US-A1- 2006 085 854
- US-A1- 2011 145 926
- ASHKAN SHARIFI SHAMILI ET AL: "Malware Detection on Mobile Devices Using Distributed Machine Learning", PATTERN RECOGNITION (ICPR), 2010 20TH INTERNATIONAL CONFERENCE ON, IEEE, PISCATAWAY, NJ, USA, 23 August 2010 (2010-08-23), pages 4348-4351, XP031772702, ISBN: 978-1-4244-7542-1
- IKER BURGUERA ET AL: "Crowdroid", SECURITY AND PRIVACY IN SMARTPHONES AND MOBILE DEVICES, ACM, 2 PENN PLAZA, SUITE 701 NEW YORK NY 10121-0701 USA, 17 October 2011 (2011-10-17), pages 15-26, XP058005976, DOI: 10.1145/2046614.2046619 ISBN: 978-1-4503-1000-0
- AUBREY-DERRICK SCHMIDT ET AL: "Monitoring Smartphones for Anomaly Detection", MOBILE NETWORKS AND APPLICATIONS, vol. 14, no. 1, 1 February 2009 (2009-02-01), pages 92-106, XP055115882, ISSN: 1383-469X, DOI: 10.1007/s11036-008-0113-x

## Description

### RELATED APPLICATIONS

This application claims the benefit of priority to U.S. Provisional Patent Application No. 61/765,461 entitled "On-Line Behavioral Analysis Engine in Mobile Device with Multiple Analyzer Model Providers" filed February 15, 2013, the entire contents of which is hereby incorporated by reference for all purposes.

### BACKGROUND

Cellular and wireless communication technologies have seen explosive growth over the past several years. This growth has been fueled by better communications, hardware, larger networks, and more reliable protocols. Wireless service providers are now able to offer their customers an ever-expanding array of features and services, and provide users with unprecedented levels of access to information, resources, and communications. To keep pace with these service enhancements, mobile electronic devices (e.g., cellular phones, tablets, laptops, etc.) have become more powerful and complex than ever. This complexity has created new opportunities for malicious software, software conflicts, hardware faults, and other similar errors or phenomena to negatively impact a mobile device's long-term and continued performance as well as power utilization levels. Accordingly, identifying and correcting the conditions and/or mobile device behaviors that may negatively impact the mobile device's long term and continued performance and power utilization levels is beneficial to users. <INSERT New Pages la, lb>

The article *"*Malware Detection on Mobile Devices using Distributed Machine Learning" by Ahskan Sharifi Shamili et al., Proceedings of the 20th IEEE International Conference on Pattern Recognition, August 23, 2010, pages 4348 - 4351, ISBN 978-1-4244-7542-1, presents a distributed Support Vector Machine (SVM) algorithm in order to detect malicious software (malware) on a network of mobile devices. The lightweight system monitors mobile user activity in a distributed and privacy-preserving way using a statistical classification model which is evolved by training with examples of both normal usage patterns and unusual behavior.

The article *"*Crowdroid: Behavior-Based Malware Detection System for Android" by Iker Burguera et al., Proceedings of the SPSM'11, October 17, 2011, Chicago, Illinois, USA, pages 15 - 26, ISBN 978-1-4503-1000-0, discloses a detector which is embedded in an overall framework for collection of traces from an unlimited number of real users based on crowdsourcing. The framework is shown to be an effective means of isolating the malware and alerting the users of a downloaded malware.

US 2006/0085854 A1 discloses a method of detecting an intrusion into (or an anomaly in a behavior of) a target software system by instrumenting the target software system to generate behavior data representing a current observation or observation aggregate. The method determines whether the current observation or observation aggregate warrants a second level examination; preferably, this determination is made by processing the current observation or observation aggregate through a first level detection algorithm that provides a first, provisional indication of a possible intrusion. If a result of executing the first level detection algorithm indicates that the current observation or observation aggregate warrants a second level examination, the method continues by processing the current observation or observation aggregate through at least one or more second level detection algorithms to provide a second, more definite, fine grain indication of a possible intrusion. The observation aggregates used by the first and second level detection algorithms may be the same or different. The first and second level detection algorithms may be executed in the same or different systems, machines or processors. The target software system operation may be suspended as the current observation or observation aggregate is processed through the one or more second level detection algorithms. A given action (e.g., sending an alert, logging the event, activating a countermeasure, or the like) may be taken if the result of the second level examination indicates a possible intrusion. Multiple algorithms may be executed together within a single examination level, with the individual results then analyzed to obtain a composite result or output indicative of intrusive or anomalous behavior.

US 2011/0145926 A1 discloses a method for determining an execution environment in a system having a plurality of execution environments including a first execution environment and a sandbox execution environment, the method comprising: receiving an executable application over a network connection; performing behavioral analysis, prior to execution of the executable application, on the executable application; determining the execution environment as a function of the behavioral analysis; if the behavioral analysis indicates sandboxed execution, starting execution of the executable application within the sandbox execution environment; if the behavioral analysis indicates other than sandboxed execution, starting execution of the executable application within the first execution environment; collecting behavioral characteristics of the executable application as it is executed; performing behavioral analysis on the collected behavioral characteristics to determine whether the execution location of the executable application should be changed.

### SUMMARY

The various aspects include methods of monitoring mobile device behaviors in a mobile device, which may include receiving a behavior model from an application download service that identifies the factors and data points that are most relevant to enabling the mobile device processor to better determine whether a mobile device behavior is benign or malicious, installing the received behavior model in the mobile device in conjunction with an existing behavior analyzer engine installed in the mobile device, and using the installed behavior model to monitor one or more mobile device behaviors. The invention is defined in the independent claims.

In an aspect, receiving the behavior model may include receiving a software application that identifies factors and data points most relevant to enabling the mobile device processor to better determine whether a mobile device behavior is benign or malicious. In a further aspect, receiving the behavior model may include receiving an XML, JSON, YAML, HTML/XHTML, or other markup language file that identifies factors and data points most relevant to enabling the mobile device processor to better determine whether a mobile device behavior is benign or malicious. In a further aspect, receiving the behavior model may include receiving a finite state machine representation that may include a mapping of features to behavior classifications.

In a further aspect, the method may include replacing an existing behavior model with the received behavior model. In an aspect, the method may also include linking the received behavior model to the existing behavior analyzer engine so that when the existing behavior analyzer engine performs analysis operations it does so using the received behavior model.

In a further aspect, the method may include updating an existing behavior model by extending it with information included in the received behavior model, and/or linking the updated behavior model to the existing behavior analyzer engine so that when the existing behavior analyzer engine performs analysis operations it does so using the updated behavior model.

In a further aspect, the method may include receiving a plurality of behavior models from a plurality of public networks, and updating at least one existing behavior model with information included in one or more of the received plurality of behavior models.

In a further aspect, receiving the behavior model from the application download service may include receiving the behavior model from one of a cloud service network server, an app store server, a web server identified via uniform resource locator address, and a file transfer protocol service network server.

In a further aspect, receiving the behavior model from the application download service may include accessing and authenticating an online app store by the mobile device processor, downloading a menu of behavior models available for download or update from the online app store, receiving in the mobile device processor a user selection input, requesting download or update of a user-selected behavior model from the online app store, and receiving the requested user-selected behavior model in a download buffer of the mobile device.

In a further aspect, installing the received behavior model in the mobile device in conjunction with the existing behavior analyzer engine installed in the mobile device may include validating the received behavior model, installing the validated behavior model in a memory of the mobile device, and registering the installed behavior model with an observer module and/or an analyzer module of the mobile device.

In a further aspect, using the installed behavior model to monitor one or more mobile device behaviors may include observing mobile device behaviors over a period of time, identifying mobile device behaviors that are inconsistent with normal mobile device operations based on observing mobile device behaviors over the period of time, generating a behavior vector based on mobile device behaviors that are that are identified as inconsistent with the normal mobile device operations, and comparing the generated behavior vector to the installed behavior model to determine whether at the identified mobile device behaviors are benign, suspicious, or malicious. In a further aspect, the method may include receiving a new behavior model that identifies additional factors and data points as being relevant to enabling the mobile device processor to better determine whether a mobile device behavior is benign or malicious, updating the installed behavior model with information included in the new behavior model in response to determining that an identified mobile device behavior is suspicious, and comparing the generated behavior vector to the updated behavior model to better determine whether the identified suspicious mobile device behavior is benign or malicious.

Further aspects include a computing device having a mobile device processor, means for receiving a behavior model from an application download service that identifies factors and data points most relevant to enabling the mobile device processor to better determine whether a mobile device behavior is benign or malicious, means for installing the received behavior model in conjunction with an existing behavior analyzer engine, and means for using the installed behavior model to monitor one or more mobile device behaviors.

In an aspect, means for receiving the behavior model may include means for receiving a software application that identifies factors and data points most relevant to enabling the mobile device processor to better determine whether a mobile device behavior is benign or malicious. In a further aspect, means for receiving the behavior model may include means for receiving an XML file that identifies factors and data points most relevant to enabling the mobile device processor to better determine whether a mobile device behavior is benign or malicious. In a further aspect, means for receiving the behavior model may include means for receiving a finite state machine representation that may include a mapping of features to behavior classifications.

In a further aspect, the computing device may include means for replacing an existing behavior model with the received behavior model, and means for linking the received behavior model to the existing behavior analyzer engine so that when the existing behavior analyzer engine performs analysis operations it does so using the received behavior model.

In a further aspect, the computing device may include means for updating an existing behavior model with information included in the received behavior model, and means for linking the updated behavior model to the existing behavior analyzer engine so that when the existing behavior analyzer engine performs analysis operations it does so using the updated behavior model.

In a further aspect, the computing device may include means for receiving a plurality of behavior models from a plurality of public networks, and means for updating at least one existing behavior model with information included in one or more of the received plurality of behavior models.

In a further aspect, means for receiving the behavior model from the application download service may include means for receiving the behavior model from one of a cloud service network server, an app store server, a web server identified via uniform resource locator address, and a file transfer protocol service network server.

In a further aspect, means for receiving the behavior model from the application download service may include means for accessing and authenticating an online app store by the mobile device processor, means for downloading a menu of behavior models available for download or update from the online app store, means for receiving in the mobile device processor a user selection input, means for requesting download or update of a user-selected behavior model from the online app store, and means for receiving the requested user-selected behavior model in a download buffer.

In a further aspect, means for installing the received behavior model in conjunction with the existing behavior analyzer engine may include means for validating the received behavior model, means for installing the validated behavior model in memory, and means for registering the installed behavior model with an observer module.

In a further aspect, means for using the installed behavior model to monitor one or more mobile device behaviors may include means for observing mobile device behaviors over a period of time, means for identifying mobile device behaviors that are inconsistent with normal mobile device operations based on observing mobile device behaviors over the period of time, means for generating a behavior vector based on mobile device behaviors that are identified as inconsistent with the normal mobile device operations, and means for comparing the generated behavior vector to the installed behavior model to determine whether the identified mobile device behaviors are benign, suspicious, or malicious. In a further aspect, the computing device may include means for receiving a new behavior model that identifies additional factors and data points as being relevant to enabling the mobile device processor to better determine whether a mobile device behavior is benign or malicious, means for updating the installed behavior model with information included in the new behavior model in response to determining that an identified mobile device behavior is suspicious, and means for comparing the generated behavior vector to the installed behavior model to determine whether the identified mobile device behaviors are benign, suspicious, or malicious.

Further aspects include a mobile computing device having a processor configured with processor-executable instructions to perform operations including receiving a behavior model from an application download service that identifies factors and data points most relevant to enabling the processor to better determine whether a mobile device behavior is benign or malicious, installing the received behavior model in conjunction with an existing behavior analyzer engine, and using the installed behavior model to monitor one or more mobile device behaviors.

In an aspect, the processor may be configured with processor-executable instructions to perform operations such that receiving the behavior model may include receiving a software application that identifies factors and data points most relevant to enabling the processor to better determine whether a mobile device behavior is benign or malicious. In a further aspect, the processor may be configured with processor-executable instructions to perform operations such that receiving the behavior model may include receiving an XML file that identifies factors and data points most relevant to enabling the processor to better determine whether a mobile device behavior is benign or malicious. In a further aspect, the processor may be configured with processor-executable instructions to perform operations such that receiving the behavior model may include receiving a finite state machine representation that includes a mapping of features to behavior classifications.

In a further aspect, the processor may be configured with processor-executable instructions to perform operations that include replacing an existing behavior model with the received behavior model, and linking the received behavior model to the existing behavior analyzer engine so that when the existing behavior analyzer engine performs analysis operations it does so using the received behavior model.

In a further aspect, the processor may be configured with processor-executable instructions to perform operations that include updating an existing behavior model with information included in the received behavior model, and linking the updated behavior model to the existing behavior analyzer engine so that when the existing behavior analyzer engine performs analysis operations it does so using the updated behavior model.

In a further aspect, the processor may be configured with processor-executable instructions to perform operations that include receiving a plurality of behavior models from a plurality of public networks, and updating at least one existing behavior model with information included in one or more of the received plurality of behavior models.

In a further aspect, the processor may be configured with processor-executable instructions to perform operations such that receiving the behavior model from the application download service may include receiving the behavior model from one of a cloud service network server, an app store server, a web server identified via uniform resource locator address, and a file transfer protocol service network server.

In a further aspect, the processor may be configured with processor-executable instructions to perform operations such that receiving the behavior model from the application download service may include accessing and authenticating an online app store, downloading a menu of behavior models available for download or update from the online app store, receiving a user selection input, requesting download or update of a user-selected behavior model from the online app store, and receiving the requested user-selected behavior model in a download buffer.

In a further aspect, the processor may be configured with processor-executable instructions to perform operations such that installing the received behavior model in conjunction with the existing behavior analyzer engine may include validating the received behavior model, installing the validated behavior model in memory, and registering the installed behavior model with an observer module.

In a further aspect, the processor may be configured with processor-executable instructions to perform operations such that using the installed behavior model to monitor one or more mobile device behaviors may include observing mobile device behaviors over a period of time, identifying mobile device behaviors that are inconsistent with normal mobile device operations based on observing mobile device behaviors over the period of time, generating a behavior vector based on mobile device behaviors that are identified as inconsistent with the normal mobile device operations, and comparing the generated behavior vector to the installed behavior model to determine whether the identified mobile device behaviors are benign, suspicious, or malicious. In a further aspect, the processor may be configured with processor-executable instructions to perform operations that include receiving a new behavior model that identifies additional factors and data points as being relevant to enabling the processor to better determine whether a mobile device behavior is benign or malicious, updating the installed behavior model with information included in the new behavior model in response to determining that an identified mobile device behavior is suspicious, and comparing the generated behavior vector to the updated behavior model to better determine whether the identified suspicious mobile device behavior is benign or malicious.

Further aspects include a non-transitory computer readable storage medium having stored thereon processor-executable software instructions configured to cause a mobile device processor to perform operations that include receiving a behavior model from an application download service, the received behavior model identifying factors and data points most relevant to enabling the mobile device processor to better determine whether a mobile device behavior is benign or malicious, installing the received behavior model in conjunction with an existing behavior analyzer engine, and using the installed behavior model to monitor one or more mobile device behaviors.

In an aspect, the stored processor-executable software instructions may be configured to cause the mobile device processor to perform operations such that receiving the behavior model may include receiving a software application that identifies factors and data points most relevant to enabling the mobile device processor to better determine whether a mobile device behavior is benign or malicious. In a further aspect, the stored processor-executable software instructions may be configured to cause the mobile device processor to perform operations such that receiving the behavior model may include receiving an XML file that identifies factors and data points most relevant to enabling the mobile device processor to better determine whether a mobile device behavior is benign or malicious. In a further aspect, the stored processor-executable software instructions may be configured to cause the mobile device processor to perform operations such that receiving the behavior model may include receiving a finite state machine representation that includes a mapping of features to behavior classifications.

In a further aspect, the stored processor-executable software instructions may be configured to cause the mobile device processor to perform operations that include replacing an existing behavior model with the received behavior model, and linking the received behavior model to the existing behavior analyzer engine so that when the existing behavior analyzer engine performs analysis operations it does so using the received behavior model. In a further aspect, the stored processor-executable software instructions may be configured to cause the mobile device processor to perform operations that include updating an existing behavior model with information included in the received behavior model, and linking the updated behavior model to the existing behavior analyzer engine so that when the existing behavior analyzer engine performs analysis operations it does so using the updated behavior model.

In a further aspect, the stored processor-executable software instructions may be configured to cause the mobile device processor to perform operations that include receiving a plurality of behavior models from a plurality of public networks, and updating at least one existing behavior model with information included in one or more of the received plurality of behavior models.

In a further aspect, the stored processor-executable software instructions may be configured to cause the mobile device processor to perform operations such that receiving the behavior model from the application download service may include receiving the behavior model from one of a cloud service network server, an app store server, a web server identified via uniform resource locator address, and a file transfer protocol service network server.

In a further aspect, the stored processor-executable software instructions may be configured to cause the mobile device processor to perform operations such that receiving the behavior model from the application download service may include accessing and authenticating an online app store, downloading a menu of behavior models available for download or update from the online app store, receiving a user selection input, requesting download or update of a user-selected behavior model from the online app store, and receiving the requested user-selected behavior model in a download buffer.

In a further aspect, the stored processor-executable software instructions may be configured to cause the mobile device processor to perform operations such that installing the received behavior model in conjunction with the existing behavior analyzer engine may include validating the received behavior model, installing the validated behavior model in memory, and registering the installed behavior model with an observer module.

In a further aspect, the stored processor-executable software instructions may be configured to cause the mobile device processor to perform operations such that using the installed behavior model to monitor one or more mobile device behaviors may include observing mobile device behaviors over a period of time, identifying mobile device behaviors that are inconsistent with normal mobile device operations based on observing mobile device behaviors over the period of time, generating a behavior vector based on mobile device behaviors that are identified as inconsistent with the normal mobile device operations, and comparing the generated behavior vector to the installed behavior model to determine whether the identified mobile device behaviors are benign, suspicious, or malicious. In a further aspect, the stored processor-executable software instructions may be configured to cause the mobile device processor to perform operations that include receiving a new behavior model that identifies additional factors and data points as being relevant to enabling the mobile device processor to better determine whether a mobile device behavior is benign or malicious, updating the installed behavior model with information included in the new behavior model in response to determining that an identified mobile device behavior is suspicious, and comparing the generated behavior vector to the updated behavior model to better determine whether the identified suspicious mobile device behavior is benign or malicious.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is a communication system block diagram illustrating network components of an example telecommunication system suitable for use in the various aspects.
FIGs. 2A-2B are block diagrams illustrating example logical components and information flows in aspect mobile devices configured to determine whether a particular mobile device behavior, software application, or process is performance-degrading, suspicious, or benign.
FIG. 3 is a block diagram illustrating example logical components and information flows in an observer module configured to perform dynamic and adaptive observations in accordance with an aspect.
FIG. 4 is a block diagram illustrating logical components and information flows in a computing system implementing observer daemons in accordance with another aspect.
FIG. 5 is a process flow diagram illustrating an aspect method for performing adaptive observations on mobile devices.
FIG. 6 is a process flow diagram illustrating an aspect method for downloading a behavior analysis module/application from an application store to a mobile device.
FIG. 7 is a process flow diagram illustrating an aspect method for downloading and using behavior analysis models.
FIG. 8 is a process flow diagram illustrating an aspect mobile device method for downloading and using a replacement behavior analysis module/application.
FIG. 9 is a process flow diagram illustrating an aspect mobile device method for downloading a behavior analysis module/application from an application store to a mobile device.
FIG. 10 is a process flow diagram illustrating an aspect mobile device method for downloading a plurality of behavior analysis modules/applications from an plurality of public networks.
FIG. 11 is a process flow diagram illustrating an aspect mobile device method for performing behavior analysis operations using updated behavior models received from a public network.
FIG. 12 is a component block diagram of a mobile device suitable for use in an aspect.
FIG. 13 is a component block diagram of a server device suitable for use in an aspect.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The various aspects provide network servers, mobile devices, systems, and methods for efficiently identifying, classifying, modeling, preventing, and/or correcting the conditions and/or mobile device behaviors that often degrade a mobile device's performance, power utilization levels, network usage levels, security and/or privacy over time. By storing information on such conditions and corrective actions in a central database, such as the "cloud," and enabling mobile devices to access and use the information stored in this database, the various aspects enable mobile devices to react to performance-limiting and undesirable operating conditions much faster and with lower power consumption than if all such analyses were accomplished independently within each mobile device. In addition, the use of aspect application programming interfaces (APIs) and modules enable communication of behavior models, classifiers, and behavior information between the mobile device and multiple third parties, application stores, public networks, private networks, original equipment manufacturers (OEMs), telecommunications service providers, and others, and enable a behavior analysis engine of the mobile device to be updated frequently, work with multiple behavior or analyzer model providers, and/or receive updated models from one or more sources (e.g., multiple cloud services), at various times, and/or at varying frequencies. In particular, the aspect APIs and modules enable behavior models to be downloaded from the Internet or an application download service, such as an "app store," (e.g., Apple® App Store, Windows® Store, Google® Play, etc.), a cloud service or server, a URL address, an FTP server, etc. In various aspects, the mobile device may update or replace pre-existing or generated behavior models based on the information or models received from an application download service, such as a cloud server communicating with a client module in the mobile device.

A number of different cellular and mobile communication services and standards are available or contemplated in the future, all of which may implement and benefit from the various aspects. Such services and standards include, e.g., third generation partnership project (3GPP), long term evolution (LTE) systems, third generation wireless mobile communication technology (3G), fourth generation wireless mobile communication technology (4G), global system for mobile communications (GSM), universal mobile telecommunications system (UMTS), 3GSM, general packet radio service (GPRS), code division multiple access (CDMA) systems (e.g., cdmaOne, CDMA1020TM), enhanced data rates for GSM evolution (EDGE), advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), and integrated digital enhanced network (iden). Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

The terms "mobile computing device" and "mobile device" are used interchangeably herein to refer to any one or all of cellular telephones, smartphones, personal or mobile multi-media players, personal data assistants (PDA's), laptop computers, tablet computers, smartbooks, ultrabooks, palm-top computers, wireless electronic mail receivers, multimedia Internet enabled cellular telephones, wireless gaming controllers, and similar personal electronic devices which include a memory, a programmable processor for which performance is important, and operate under battery power such that power conservation methods are of benefit. While the various aspects are particularly useful for mobile computing devices, such as smartphones, which have limited resources and run on battery, the aspects are generally useful in any electronic device that includes a processor and executes application programs such as internet-of-things (IOT) connected devices.

The term "performance degradation" is used herein to refer to a wide variety of undesirable mobile device operations and characteristics, such as longer processing times, slower real time responsiveness, lower battery life, loss of private data, malicious economic activity (e.g., sending unauthorized premium SMS message), denial of service (DoS), operations relating to commandeering the mobile device or utilizing the phone for spying or botnet activities, etc.

Generally, the performance and power efficiency of a mobile device degrade over time. Recently, anti-virus companies (e.g., McAfee, Symantec, etc.) have begun marketing mobile anti-virus, firewall, and encryption products that aim to slow this degradation. However, many of these solutions rely on the periodic execution of a computationally-intensive scanning engine on the mobile device, which may consume many of the mobile device's processing and battery resources, slow or render the mobile device useless for extended periods of time, and/or otherwise degrade the user experience. In addition, these solutions are typically limited to detecting known viruses and malware, and do not address the multiple complex factors and/or the interactions that often combine to contribute to a mobile device's degradation over time (e.g., when the performance degradation is not caused by viruses or malware). For these and other reasons, existing anti-virus, firewall, and encryption products do not provide adequate solutions for identifying the numerous factors that may contribute to a mobile device's degradation over time, for preventing mobile device degradation, or for efficiently restoring an aging mobile device to its original condition.

Mobile devices are resource constrained systems that have relatively limited processing, memory, and energy resources. Modern mobile devices are also complex systems, and there are a large variety of factors that may contribute to the degradation in performance and power utilization levels of a mobile device over time, including poorly designed software applications, malware, viruses, fragmented memory, background processes, etc. Due to the number, variety, and complexity of these factors, it is often not feasible to evaluate all the various processes, behaviors, or factors (or combinations thereof) that may degrade performance and/or power utilization levels of the complex yet resource-constrained systems of modern mobile devices.

To provide better performance in view of these facts, the various aspects include mobile devices configured to work in conjunction with any number or combination of public and private cloud services/networks (e.g., an application store, anti-virus partner, security partner, etc.) to intelligently and efficiently identify factors that may contribute to the degradation in performance and power utilization levels of mobile devices over time. Such cloud services may provide computational offloading, crowd sourcing, as well as provide other benefits so that a mobile device may identify performance-degrading factors on the mobile device without consuming an excessive amount of processing, memory, or energy resources of the mobile device.

In an aspect, an observer process, daemon, module, or sub-system (herein collectively referred to as a "module") of the mobile device may instrument or coordinate various application programming interfaces (APIs), registers, counters or other available information or components (herein collectively "instrumented components") at various levels of the mobile device system, and collect behavior information from the instrumented components. In an aspect, the mobile device may also include an analyzer module and/or a classifier module. The observer module may communicate (e.g., via a memory write operation, function call, etc.) the collected behavior information to the classifier module and/or the analyzer module (e.g., via a memory write operation, etc.) of the mobile device, which may analyze and/or classify the collected behavior information, generate behavior vectors, generate spatial and/or temporal correlations based on the behavior vector and information collected from various other mobile device sub-systems, and determine whether a particular mobile device behavior, software application, or process is benign, suspicious, malicious, or performance-degrading.

The analyzer module and/or classifier module of the mobile device may be configured to perform real-time analysis operations, which may include performing, executing, and/or applying data, algorithms, and/or models to real time behavior information collected by the observer module to determine whether a mobile device behavior is benign, suspicious, malicious, or performance-degrading. The data, algorithms, and/or models applied by analyzer and/or classifier modules may be pre-installed on the mobile device, generated on the mobile device, and/or downloaded from or upgraded by any number or combination of public and private cloud services/networks, including third party vendors and application stores. Downloaded data, algorithms, and/or models may be installed in or linked to the analyzer and/or classifier modules in an install or update process so that when the analyzer and/or classifier modules perform real-time analysis operations they do so using the downloaded data, algorithms, and/or models.

Various aspects may include mobile devices configured with an interfaces module that facilitates communications between the mobile device and one or more private and/or public networks and services (e.g., application download service) and enables the analyzer module to work in conjunction with multiple cloud services. The interfaces module also increases the security and reliability of the mobile device by enabling the mobile device to work with one or more security cloud partners, models generated in the mobile device, and models from other partners (e.g., OEMs, network operators, etc.). The interfaces module also enables the mobile device to download or otherwise receive incremental updates to the data, algorithms, and/or models linked to the analyzer and classifier modules.

The interfaces module may also provide an application-level download mechanism that allows for the mobile device to be distributed with an observer module and working analyzer algorithms, and be capable of receiving machine learning or behavior models downloaded from an application download service or a third party at a later time. These aspects enable mobile device users to purchase up-to-date and targeted models that best meet the user's security and preferences. Also, these aspects enable installed models to be updated incrementally and/or through already deployed mechanisms for updating applications through app stores and other third-party software update mechanisms. In this matter, mobile devices may be configured with the most up to date analyzer and/or classifier models using existing software distribution and support infrastructures and without consuming an excessive amount of processing, memory, or energy resources of the mobile device.

In an aspect, the interfaces module may be configured to enable an application download service (e.g., server in a cloud network, app store, etc.) to send data/behavior models to the mobile device. The mobile device may receive and implement, apply, or use the data/behavior models to identify and correct suspicious, malicious or performance-degrading mobile device behaviors. This may be achieved by the mobile device replacing or updating an all or portions of existing data/behavior model of the mobile device, and applying the new/updated models to information collected in the mobile device. The data/behavior models may be classifiers, models of power consumption provided by the OEM, models of network traffic usage provided by network operators, models of malicious activity provided by a security partner, reduced feature models (RFMs), etc.

In various aspects, the mobile device may be configured to communicate with a network server that includes an offline classifier and/or a real-time online classifier. The offline classifier may generate robust data/behavior models based on information previously received from a cloud service/network. The real-time online classifier may generate lean data/behavior models based on analyzing the larger and more complicated behavior models generated from information received from the cloud service/network. Lean data/behavior models may include models that consider or evaluate a subset of information and/or limited number of state conditions and behaviors that are likely to indicate suspicious or malicious behavior, while reducing the amount of data that the analyzer must process. Both the online and offline classifiers may generate data/behavior models that include a reduced subset of information made available by the cloud service/network for a particular mobile device. In an aspect, generating the lean data/behavior models may include generating one or more reduced feature models (RFMs) and/or leveraging a crowd source model.

In various aspects, mobile devices, including mobile devices configured with downloaded analyzer/classifier models, may forward behavior vectors, analysis results and other behavior analysis data to a network server, such as a server supporting a downloaded analyzer/classifier model. This feedback of behavior vectors and/or analysis results may occur in real time or when convenient, and may enable the network server to develop and refine the analyzer/classifier model, which may then be offered to mobile devices through a public cloud network, such as via an app store infrastructure as application updates.

In an aspect, the mobile device may be configured to leverage a crowd sourced model received from a network server via a public cloud network or an app store-type mechanism. The crowd sourced model may be generated in the network server via the server performing, executing, and/or applying machine learning and/or context modeling techniques to behavior information and/or results of behavior analyses provided by many mobile devices. For example, the network server may receive a large number of reports from many mobile devices and analyze, consolidate or otherwise turn such crowd-sourced information into useable information, particularly a lean data set or focused behavior models that can be used or accessed by all mobile devices.

In an aspect, the network server may send incremental updates to the mobile device, and the mobile device may be configured to update its models based on the incremental updates received from the network server. For example, if the network server includes a database that stores ten thousand behavioral rules or records, and a new rule/record is added to the database (e.g. via crowd sourcing data received from many mobile devices), the network server may be configured to send only a portion of a model and/or the new rule or record (as opposed to all ten thousand records) to the mobile device. The mobile device may receive the new rule/record and update its existing models to include the rule. This downloading of new rules/records and updates to existing models may be accomplished via an app store interface.

In an aspect, the network server may continuously reevaluate existing lean data/behavior models as new behavior/analysis reports are received from mobile devices, and/or generate new or updated lean data/behavior models based on historical information (e.g., collected from prior executions, previous applications of behavior models, etc.), new information, machine learning, context modeling, and detected changes in the available information, mobile device states, environmental conditions, network conditions, mobile device performance, battery consumption levels, etc.

In an aspect, the network server may be configured to generate the lean data/behavior models to include an initial feature set (e.g., an initial reduced feature model) and one or more subsequent feature sets (e.g., subsequent reduced feature models). The initial feature set may include information determined to have a highest probability of enabling the classifier module of the mobile devices to better determine whether a particular mobile device behavior, software application, or process is malicious/performance-degrading or benign. Each subsequent feature set may include information determined to have the next highest probability of conclusively determining that the mobile device behavior, software application, or process is malicious/performance-degrading or benign. Each subsequent feature set may include a larger dataset than its preceding feature set, and thus the performance and power consumption costs associated with applying the data/behavior models may increase progressively for each subsequent feature set.

In an aspect, the classifier module of the mobile device may include or implement progressive behavior models (or classifiers) that enable the mobile device processor to evaluate the mobile device behaviors in stages. For example, the classifier module may be configured to first apply a lean data/behavior model that includes the initial feature set, then models that include progressively larger feature sets until the classifier module determines that a mobile device behavior is benign or malicious/performance-degrading. The classifier module may then send the results of its operations and/or success rates associated with the application of each model to the network server. The network server may use such results to update its lean data/behavior models (e.g., the features sets included in each model, etc.), thereby refining the data and/or models based on the results/success rates of all reporting mobile devices. The network server may then make the updated lean data/behavior models available to mobile devices as new model apps or upgrades to previously downloaded apps, so mobile devices have access to the refined lean data/behavior models. In this manner, mobile devices can quickly benefit from the behaviors and conclusions of other mobile devices leveraging the software delivery and update mechanism provided by an app store infrastructure.

In an aspect, the network server may be configured to continuously update the online and offline classifiers, model generators, and/or cloud model. The network server may be configured to intelligently determine when the changes are substantial enough to warrant generating new models and when the changes may be ignored. For example, the network server may receive updates from many different mobile devices, perform machine learning operations to generate a first family of classifiers, determine whether there are enough changes to the generated first family of classifiers to warrant generating new models, determine which features in the generated first family of classifiers are the best features when it is determined that there are enough changes to the first family of classifiers, generate a second family of classifiers based on the best features, determine whether there are enough changes to the generated second family of classifiers, and generate/update mobile device classifier data/behavior models when it is determined that there are enough changes to the second family of classifiers.

In an aspect, the interfaces module may be configured to enable the mobile device to receive fewer or less frequent updates than those that are typically received from a private cloud service. This allows the mobile device to receive updated models at the user's discretion, in a flexible manner and without requiring constant connectivity to the cloud service.

In various aspects, all or portions of the analyzer module may be downloaded from multiple sources, pre-loaded on the mobile device, downloaded into a client application of the mobile device, and downloaded as a software application form an application download service (e.g., app store, etc.).

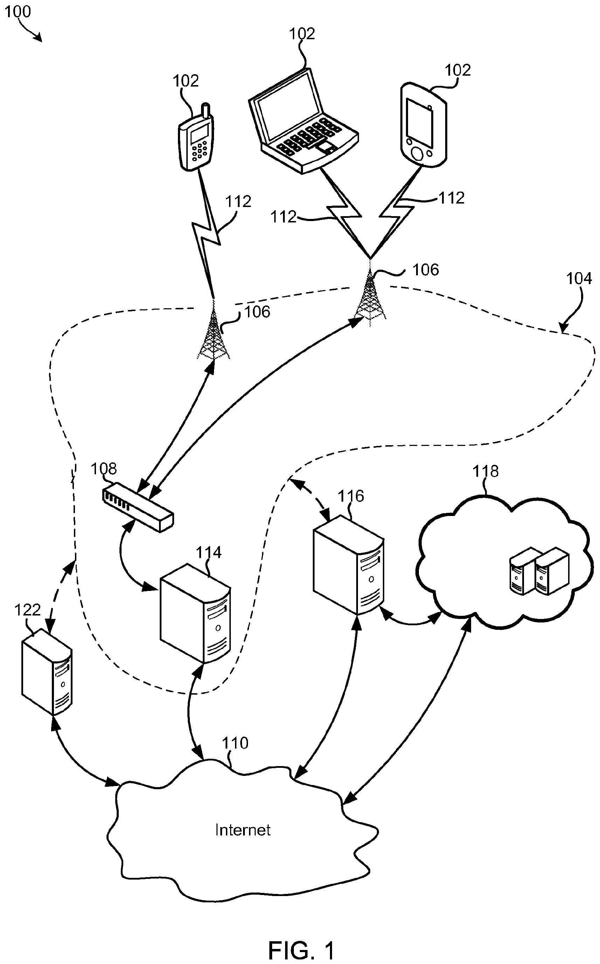

The various aspects may be implemented within a variety of communication systems, such as the example communication system 100 illustrated in FIG. 1. A typical cell telephone network 104 includes a plurality of cell base stations 106 coupled to a network operations center 108, which operates to connect voice calls and data between mobile devices 102 (e.g., cell phones, laptops, tablets, etc.) and other network destinations, such as via telephone land lines (e.g., a POTS network, not shown) and the Internet 110. Communications between the mobile devices 102 and the telephone network 104 may be accomplished via two-way wireless communication links 112, such as 4G, 3G, CDMA, TDMA, LTE and/or other cell telephone communication technologies. The telephone network 104 may also include one or more servers 114 coupled to or within the network operations center 108 that provide a connection to the Internet 110.

The communication system 100 may further include private and public network servers 116, 122 connected to the telephone network 104 and to the Internet 110. The connection between the network servers 116, 122 and the telephone network 104 may be through the Internet 110, through a private network (as illustrated by the dashed arrows), or any other public or semi-public network (e.g., application download framework). In an aspect, a private network server 116 may also be implemented as a server within the network infrastructure of a cloud service provider network 118. Communication between the network servers 116, 122 and the mobile devices 102 may be achieved through the telephone network 104, the internet 110, private network (not illustrated), or any combination thereof.

The network servers 116, 122 may send data/behavior models to the mobile device 102, which may receive and use lean data/behavior models to identify suspicious or performance-degrading mobile device behaviors, software applications, processes, etc. The network servers 116, 122 may also send classification and modeling information to the mobile devices 102 to replace, update, create and/or maintain mobile device data/behavior models.

The mobile device 102 may collect behavioral, state, classification, modeling, success rate, and/or statistical information in the mobile device 102, and send the collected information to the network server 116 (e.g., via the telephone network 104) for analysis. The network server 116 may use information received from the mobile device 102 to update or refine the data/behavior models or the classification/ modeling information to include a more targeted and/or reduced subset of features.

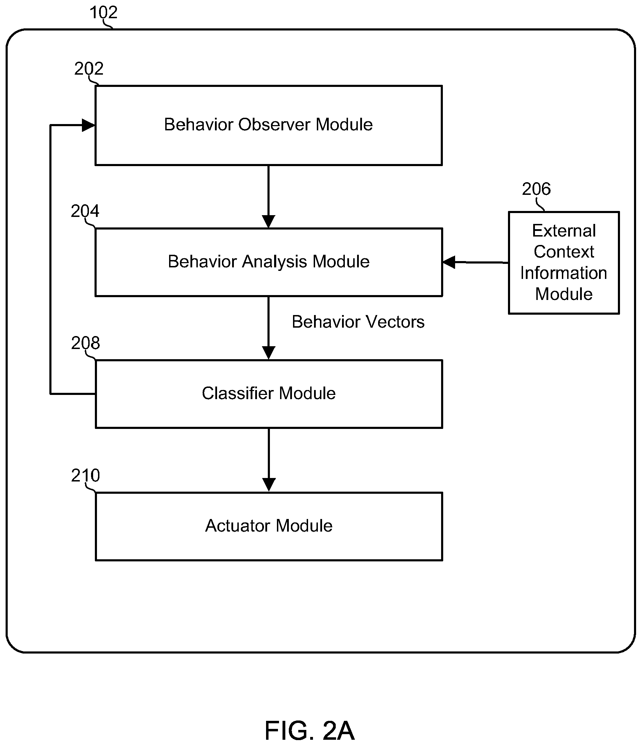

FIG. 2A illustrates example logical components and information flows in an aspect mobile device 102 configured to determine whether a particular mobile device behavior, software application, or process is malicious/performance-degrading, suspicious, or benign. In the example illustrated in FIG. 2A, the mobile device 102 includes a behavior observer module 202, a behavior analyzer module 204, an external context information module 206, a classifier module 208, and an actuator module 210. In an aspect, the classifier module 208 may be implemented as part of the behavior analyzer module 204. In an aspect, the behavior analyzer module 204 may be configured to generate one or more classifier modules 208, each of which may include one or more classifiers.

Each of the modules 202-210 may be implemented in software, hardware, or any combination thereof. In various aspects, the modules 202-210 may be implemented within parts of the operating system (e.g., within the kernel, in the kernel space, in the user space, etc.), within separate programs or applications, in specialized hardware buffers or processors, or any combination thereof. In an aspect, one or more of the modules 202-210 may be implemented as software instructions executing on one or more processors of the mobile device 102.

The behavior observer module 202 may be configured to instrument or coordinate application programming interfaces (APIs) and other components (e.g., registers, counters, etc.) at various levels/modules of the mobile device, and monitor/observe mobile device operations and events (e.g., system events, state changes, etc.) at the various levels/modules via the instrumented components, collect information pertaining to the observed operations/events, intelligently filter the collected information, generate one or more observations based on the filtered information, and store the generated observations in a memory (e.g., in a log file, etc.) and/or send (e.g., via memory writes, function calls, etc.) the generated observations to the behavior analyzer module 204.

The behavior observer module 202 may monitor/observe mobile device operations and events by collecting information from the instrumented components, including information pertaining to library API calls in an application framework or run-time libraries, system call APIs, file-system and networking sub-system operations, device (including sensor devices) state changes, and other similar events. The behavior observer module 202 may also monitor file system activity, which may include searching for filenames, categories of file accesses (personal info or normal data files), creating or deleting files (e.g., type exe, zip, etc.), file read/write/seek operations, changing file permissions, etc.

The behavior observer module 202 may also monitor data network activity, which may include types of connections, protocols, port numbers, server/client that the device is connected to, the number of connections, volume or frequency of communications, etc. The behavior observer module 202 may monitor phone network activity, which may include monitoring the type and number of calls or messages (e.g., SMS, etc.) sent out, received, or intercepted (e.g., the number of premium calls placed).

The behavior observer module 202 may also monitor the system resource usage, which may include monitoring the number of forks, memory access operations, number of files open, etc. The behavior observer module 202 may monitor the state of the mobile device, which may include monitoring various factors, such as whether the display is on or off, whether the device is locked or unlocked, the amount of battery remaining, the state of the camera, etc. The behavior observer module 202 may also monitor inter-process communications (IPC) by, for example, monitoring intents to crucial services (browser, contracts provider, etc.), the number or degree of inter-process communications, pop-up windows, etc.

The behavior observer module 202 may also monitor/observe driver statistics and/or the status of one or more hardware components, which may include cameras, sensors, electronic displays, WiFi communication components, data controllers, memory controllers, system controllers, access ports, timers, peripheral devices, wireless communication components, external memory chips, voltage regulators, oscillators, phase-locked loops, peripheral bridges, and other similar components used to support the processors and clients running on the mobile computing device.

The behavior observer module 202 may also monitor/observe one or more hardware counters that denote the state or status of the mobile computing device and/or mobile device sub-systems. A hardware counter may include a special-purpose register of the processors/cores that is configured to store a count or state of hardware-related activities or events occurring in the mobile computing device.

The behavior observer module 202 may also monitor/observe actions or operations of software applications, software downloads from an application download server (e.g., Apple® App Store server, Google® Play server), mobile device information used by software applications, call information, text messaging information (e.g., SendSMS, BlockSMS, ReadSMS, etc.), media messaging information (e.g., ReceiveMMS), user account information, location information, camera information, accelerometer information, browser information, content of browser-based communications, content of voice-based communications, short range radio communications (e.g., Bluetooth, WiFi, etc.), content of text-based communications, content of recorded audio files, phonebook or contact information, contacts lists, etc. As the behavior observer module 202 is an internal process, its observations of information and content of communications should not compromise user privacy, and the objective of curtailing or otherwise mitigating malicious behavior should function to protect user personal and confidential information from unauthorized distribution by malware.

The behavior observer module 202 may monitor/observe transmissions or communications of the mobile device, including communications that include voicemail (VoiceMailComm), device identifiers (DeviceIDComm), user account information (UserAccountComm), calendar information (CalendarComm), location information (LocationComm), recorded audio information (RecordAudioComm), accelerometer information (AccelerometerComm), etc.

The behavior observer module 202 may monitor/observe usage of and updates/changes to compass information, mobile device settings, battery life, gyroscope information, pressure sensors, magnet sensors, screen activity, etc. The behavior observer module 202 may monitor/observe notifications communicated to and from a software application (AppNotifications), application updates, etc. The behavior observer module 202 may monitor/observe conditions or events pertaining to a first software application requesting the downloading and/or install of a second software application. The behavior observer module 202 may monitor/observe conditions or events pertaining to user verification, such as the entry of a password, etc.

The behavior observer module 202 may also monitor/observe conditions or events at multiple levels of the mobile device, including the application level, radio level, and sensor level.

To reduce the number of factors monitored to a manageable level, in an aspect, the behavior observer module 202 may perform coarse observations by monitoring/observing an initial set of behaviors or factors that are a small subset of all factors that could contribute to the mobile device's degradation. In an aspect, the behavior observer module 202 may receive the initial set of behaviors and/or factors from a network server 116 and/or a component in a cloud service or network 118. In an aspect, the initial set of behaviors/factors may be specified in data/behavior models received from the network server 116 or cloud service/network 118. In an aspect, the initial set of behaviors/factors may be specified in a reduced feature model (RFMs).

While the behavior observe module 202 may be provisioned with the mobile device manufacturer or service provider, in an aspect the behavior observe module 202 may be replaced, supplemented or updated by a downloaded behavior observe application from an app store. In other words, in this aspect, a downloaded module may include a behavior observe module, a behavior analyzer module, and/or classifier module.

The behavior analyzer module 204 and/or classifier module 208 may receive the observations from the behavior observer module 202, compare the received information (i.e., observations) with contextual information received from the external context information module 206, and identify subsystems, processes, and/or applications associated with the received observations that are contributing to (or are likely to contribute to) the device's degradation over time, or which may otherwise cause problems on the device.

In an aspect, the behavior analyzer module 204 and/or classifier module 208 may include intelligence for utilizing a limited set of information (i.e., coarse observations) to identify behaviors, processes, or programs that are contributing to (or are likely to contribute to) the device's degradation over time, or which may otherwise cause problems on the device. For example, the behavior analyzer module 204 may be configured to analyze information (e.g., in the form of observations) collected from various modules (e.g., the behavior observer module 202, external context information module 206, etc.), learn the normal operational behaviors of the mobile device, and generate one or more behavior vectors based the results of the comparisons. The behavior analyzer module 204 may send the generated behavior vectors to the classifier module 208 for further analysis.

The classifier module 208 may receive the behavior vectors and compare them to one or more behavior modules to determine whether a particular mobile device behavior, software application, or process is performance-degrading/malicious, benign, or suspicious.

When the classifier module 208 determines that a behavior, software application, or process is malicious or performance-degrading, the classifier module 208 may notify the actuator module 210, which may perform various actions or operations to correct mobile device behaviors determined to be malicious or performance-degrading and/or perform operations to heal, cure, isolate, notify the user or otherwise fix the identified problem.

When the classifier module 208 determines that a behavior, software application, or process is suspicious, the classifier module 208 may notify the behavior observer module 202, which may adjust the adjust the granularity of its observations (i.e., the level of detail at which mobile device behaviors are observed) and/or change the behaviors that are observed based on information received from the classifier module 208 (e.g., results of the real-time analysis operations), generate or collect new or additional behavior information, and send the new/additional information to the behavior analyzer module 204 and/or classifier module 208 for further analysis/classification. Such feedback communications between the behavior observer module 202 and the classifier module 208 enable the mobile device 102 to recursively increase the granularity of the observations (i.e., make finer or more detailed observations) or change the features/behaviors that are observed until a source of a suspicious or performance-degrading mobile device behavior is identified, until a processing or battery consumption threshold is reached, or until the mobile device processor determines that the source of the suspicious or performance-degrading mobile device behavior cannot be identified from further increases in observation granularity. Such feedback communication also enables the mobile device 102 to adjust or modify the data/behavior models locally in the mobile device without consuming an excessive amount of the mobile device's processing, memory, or energy resources.

In an aspect, the behavior observer module 202 and the behavior analyzer module 204 may provide, either individually or collectively, real-time behavior analysis of the computing system's behaviors to identify suspicious behavior from limited and coarse observations, to dynamically determine behaviors to observe in greater detail, and to dynamically determine the level of detail required for the observations. In this manner, the behavior observer module 202 enables the mobile device 102 to efficiently identify and prevent problems from occurring on mobile devices without requiring a large amount of processor, memory, or battery resources on the device.

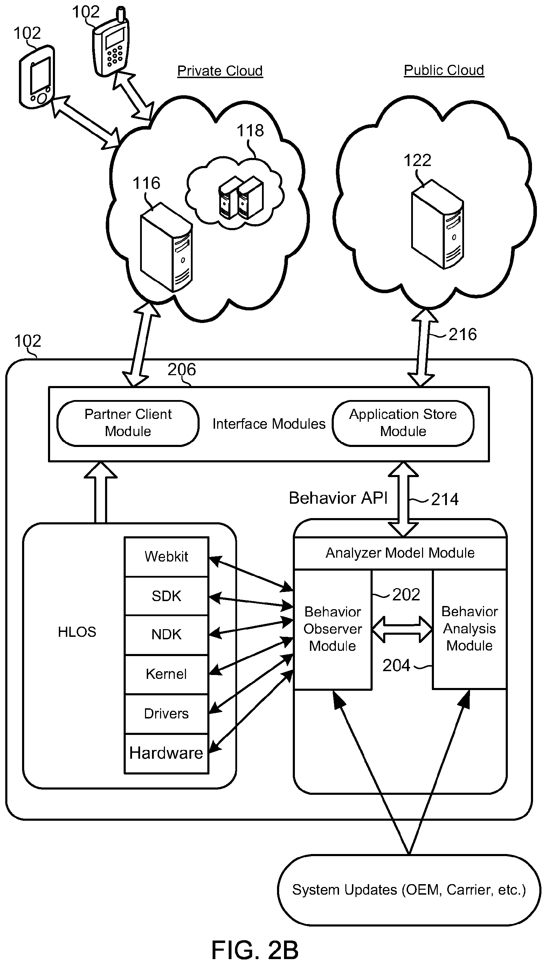

FIG. 2B illustrates other example logical components and information flows in an aspect mobile device 102 configured to determine whether behaviors, software applications, and/or processes are malicious, performance-degrading, suspicious, or benign. In the example illustrated in FIG. 2B, the mobile device 102 includes a behavior observer module 202, a behavior analyzer module 204, interface modules 206, and a behavior API 214, which may be implemented as a module or component. The interface modules may include a partner client module and an application store module. Each of the modules 202-208, 214 may be implemented in software, hardware, or any combination thereof. In various aspects, the modules 202-208, 214 may be implemented within parts of a high-level operating system 210 (e.g., within the kernel, in the kernel space, in the user space, etc.), within separate programs or applications, in specialized hardware buffers or processors, or any combination thereof. In an aspect, one or more of the modules 202-208, 214 may be implemented as software instructions executing on one or more processors of the mobile device 102.

The behavior observer module 202 may be configured to perform cross-layer observations on various mobile device modules and sub-systems encompassing webkit, SDK, NDK, kernel, drivers, browsers, web-layer software and hardware in order to characterize the mobile device behavior.

The behavior observer module 202 may monitor/observe mobile device behaviors based on the received model, generate observations, and send the observations to the behavior analyzer module 204. The behavior analyzer module 204 may perform real-time analysis operations, which may include applying data/behavior models to behavior information collected by the behavior observer module 202 to determine whether a mobile device behavior is benign, suspicious, or malicious/performance-degrading. The behavior models may be generated in the mobile device, or may be received from an external source, such as an application download service (e.g., Apple® App Store, Windows® Store, Google® Play, etc.). For example, in various aspects, the behavior analyzer module 204 may receive behavior models from a third party network server 116, a component in a cloud service or network 118, or an application download server 122 via the interface modules 206.

The interface modules 206 may store (or have access to a database or server that stores) collaboration information and/or data-structures suitable for interpreting models received from an application download server 122. Such collaboration information/data-structures may include a dictionary database of the behavior features and grammar for interpreting, analyzing, combining, and/or applying the behavior models, and/or various representations (e.g. a finite state machine, a decision tree, etc.) that map the behavior features to a classification or analysis of the mobile device behaviors, applications or processes. Each representation may include one or more data-structures, may describe a set of complex relationships, mappings, interconnections, dependencies, transformations and/or states, and may organize information so as to create new elements of knowledge. A representation may describe a mobile device behavior and its features, behavior classifications, and relationships with other behaviors, classifications, or systems.

In an aspect, the interface modules 206 may be configured to decode, interpret, evaluate, combine, organize and/or encode observed behavior information, mobile device features, and data models into a communication message suitable for transmission to the application download server 122 via a communication link 216 and/or suitable for sending to the behavior observer and analyzer modules via the behavior API 214.

In various aspects, the interface modules 206 may be configured to allow an application download server 122 to interact with behavior observer and analyzer modules 202, 204 in mobile devices 102 via the behavior API 214 module/component. For example, an application developer with granted user permissions may access the behavior observation and analysis modules 202, 204 via the interface modules 206 to perform operations to: discover the capabilities of the mobile device; perform client registration and authentication operations on the device; access a list of mobile device behaviors or features that may be observed/analyzed in the mobile device; generate, populate, and/or update a finite state machine description of a mapping of features to benign, suspicious, or malicious/performance-degrading behaviors; issue requests for additional, more detailed, or more targeted observations of mobile device behaviors; issue requests to back-off from observing specific applications (e.g., a white list); issue requests to receive behavior logs (good, bad, suspicious, etc.); issue requests that cause the mobile device to initiate a corrective action (e.g., via the actuation module 208); and/or perform other similar operations in the mobile device.

The classifier module 208 may be configured to communicate the results of its real-time analysis operations to the behavior observer module 202 when the classifier module 208 determines that a device behavior is suspicious. The behavior observer module 202 may adjust the granularity of its observations (i.e., the level of detail at which mobile device behaviors are observed) and/or change the behaviors that are observed based on information received from the classifier module 208 (e.g., based on the results of the real-time analysis operations), generate or collect new or additional behavior information, and send the new/additional information to the classifier module for further analysis/classification (e.g., in the form of new models). In this manner, the mobile device 102 may recursively increase the granularity of the observations (i.e., make finer or more detailed observations) or change the features/behaviors that are observed until a source of a suspicious or performance-degrading mobile device behavior is identified, until a processing or battery consumption threshold is reached, or until the mobile device processor determines that the source of the suspicious or performance-degrading mobile device behavior cannot be identified from further increases in observation granularity.

The mobile device 102 may the send the results of its operations and/or success rates associated with the application of models to the network server 116. The network server 116 may generate training data (e.g., via a training data module) based on the results/success rates for use by a model generator, which may generate updated models and send the updated models to the mobile device 102.

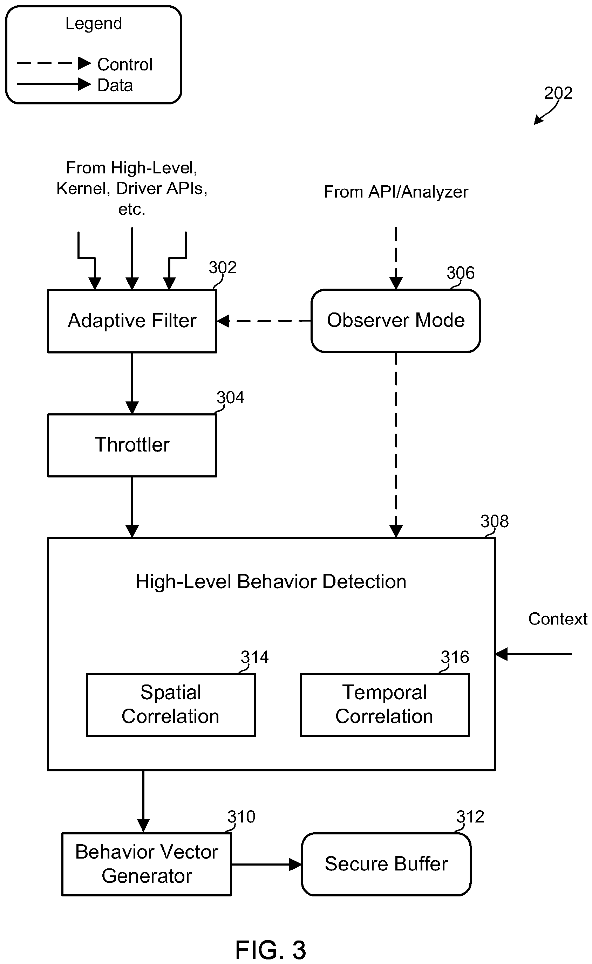

FIG. 3 illustrates example logical components and information flows in a behavior observer module 202 of a computing system configured to collect behavior information that may be applied to models received from an application download service in accordance with an aspect. The behavior observer module 202 may include an adaptive filter module 302, a throttle module 304, an observer mode module 306, a high-level behavior detection module 308, a behavior vector generator 310, and a secure buffer 312. The high-level behavior detection module 308 may include a spatial correlation module 314 and a temporal correlation module 316.

The observer mode module 306 may receive control information from various sources, which may include an analyzer unit (e.g., the behavior analyzer module 204 described above with reference to FIG. 2), an application API, and/or any instrumented component. The observer mode module 306 may send control information pertaining to various observer modes to the adaptive filter module 302 and the high-level behavior detection module 308.

The adaptive filter module 302 may receive data/information from multiple sources, and intelligently filter the received information to generate a smaller subset of information selected from the received information. This filter may be adapted based on information or control received from the analyzer module, or a higher-level process communicating through an API. The filtered information may be sent to the throttle module 304, which may be responsible for controlling the amount of information flowing from the filter to ensure that the high-level behavior detection module 308 does not become flooded or overloaded with requests or information.

The high-level behavior detection module 308 may receive data/information from the throttle module 304, control information from the observer mode module 306, and context information from other components of the mobile device. The high-level behavior detection module 308 may use the received information to perform spatial and temporal correlations to detect or identify high-level behaviors that may cause the device to perform at sub-optimal levels. The results of the spatial and temporal correlations may be sent to the behavior vector generator 310, which may receive the correlation information and generate a behavior vector that describes the behaviors of a particular process, application, or sub-system. In a non-limiting aspect, the behavior vector generator 310 may generate the behavior vector such that a high-level behavior of a particular process, application, or sub-system may be an element of the behavior vector. In an aspect, the generated behavior vector may be stored in a secure buffer 312. Examples of high-level behavior detection may include detection of the existence of a particular event, the amount or frequency of another event, the relationship between multiple events, the order in which events occur, time differences between the occurrence of certain events, etc.

In the various aspects, the behavior observer module 202 may perform adaptive observations and control the observation granularity. That is, the behavior observer module 202 may dynamically identify the relevant behaviors that are to be observed, and dynamically determine the level of detail at which the identified behaviors are to be observed. In this manner, the behavior observer module 202 enables the system to monitor the behaviors of the mobile device at various levels (e.g., multiple coarse and fine levels). The behavior observer module 202 may enable the system to adapt to what is being observed. The behavior observer module 202 may enable the system to dynamically change the factors/behaviors being observed based on a focused subset of information, which may be obtained from a wide variety of sources.

As discussed above, the behavior observer module 202 may perform adaptive observation techniques and control the observation granularity based on information received from a variety of sources. For example, the high-level behavior detection module 308 may receive information from the throttle module 304, the observer mode module 306, and context information received from other components (e.g., sensors) of the mobile device. As an example, a high-level behavior detection module 308 performing temporal correlations might detect that a camera has been used and that the mobile device is attempting to upload the picture to a server. The high-level behavior detection module 308 may also perform spatial correlations to determine whether an application on the mobile device took the picture while the device was holstered and attached to the user's belt or if a background process triggered the camera snapshot event without user interaction. The high-level behavior detection module 308 may determine whether this detected high-level behavior (e.g., usage of the camera while holstered) is a behavior that is acceptable or common, which may be achieved by comparing the current behavior with past behaviors of the mobile device and/or accessing information collected from a plurality of devices (e.g., information received from a crowd-sourcing server). Since taking pictures and uploading them to a server while holstered is an unusual behavior (as may be determined from observed normal behaviors in the context of being holstered), in this situation the high-level behavior detection module 308 may recognize this as a potentially threatening behavior and initiate an appropriate response (e.g., shutting off the camera, sounding an alarm, etc.).

In an aspect, the behavior observer module 202 may be implemented in multiple parts.

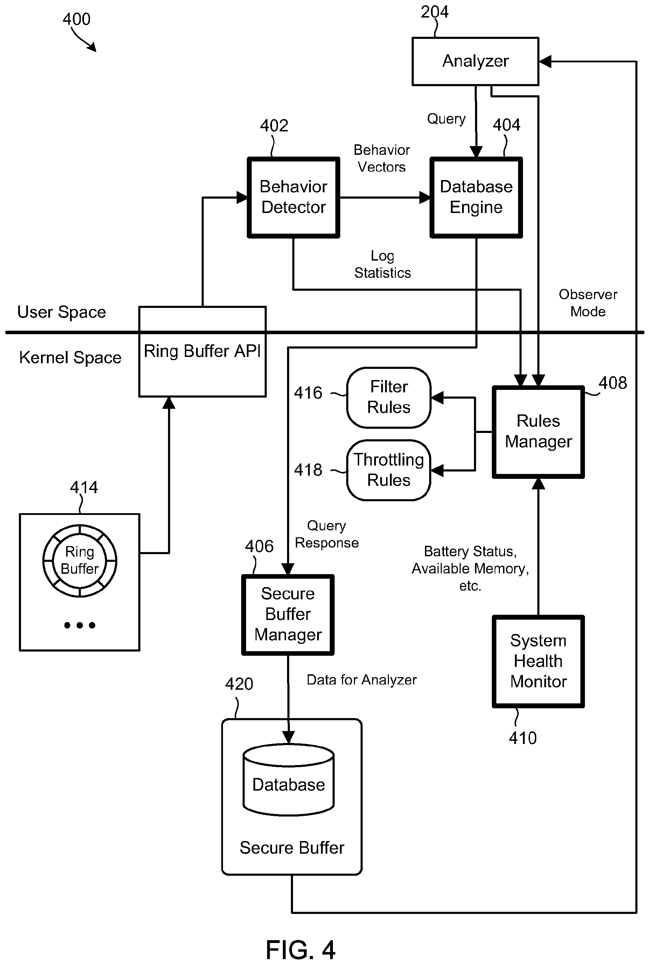

FIG. 4 illustrates logical components and information flows in a computing system 400 implementing an aspect observer daemon. In the example illustrated in FIG. 4, the computing system 400 includes a behavior detector 402 module, a database engine 404 module, and a behavior analyzer module 204 in the user space, and a ring buffer 414, a filter rules 416 module, a throttling rules 418 module, and a secure buffer 420 in the kernel space. The computing system 400 may further include an observer daemon that includes the behavior detector 402 and the database engine 404 in the user space, and the secure buffer manager 406, the rules manager 408, and the system health monitor 410 in the kernel space.

The various aspects may provide cross-layer observations on mobile devices encompassing webkit, SDK, NDK, kernel, drivers, and hardware in order to characterize system behavior. The behavior observations may be made in real time.

The observer module may perform adaptive observation techniques and control the observation granularity. As discussed above, there are a large number (i.e., thousands) of factors that could contribute to the mobile device's degradation, and it may not be feasible to monitor/observe all of the different factors that may contribute to the degradation of the device's performance. To overcome this, the various aspects dynamically may identify the relevant behaviors that are to be observed, and dynamically determine the level of detail at which the identified behaviors are to be observed. The identified behaviors may be used as part of a crowd sourcing model so that information learned on a first mobile device may be used to benefit other mobile devices, even before any of the other mobile devices encounter the same or similar behavior.

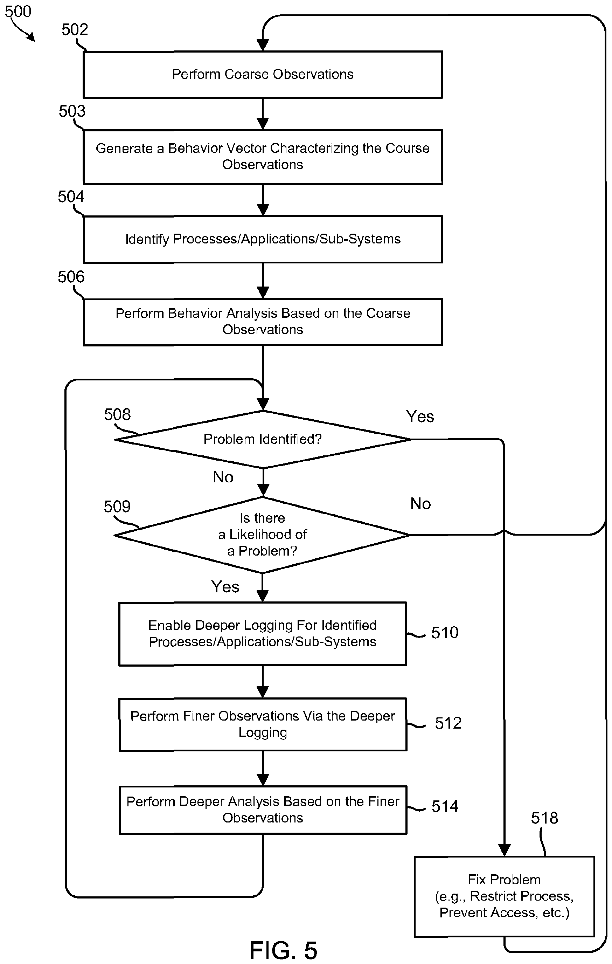

FIG. 5 illustrates an example method 500 for performing dynamic and adaptive observations in accordance with an aspect. In block 502, the mobile device processor may perform coarse observations by monitoring/observing a subset of large number factors/behaviors that could contribute to the mobile device's degradation. In block 503, the mobile device processor may generate a behavior vector characterizing the coarse observations and/or the mobile device behavior based on the coarse observations. In block 504, the mobile device processor may identify subsystems, processes, and/or applications associated with the coarse observations that may potentially contribute to the mobile device's degradation. This may be achieved, for example, by comparing information received from multiple sources with contextual information received from sensors of the mobile device. In block 506, the mobile device processor may perform behavioral analysis operations based on the coarse observations. In aspect, as part of blocks 503 and 504, the mobile device processor may perform one or more of the operations discussed above with reference to FIGs. 2-4.

In determination block 508, the mobile device processor may determine whether suspicious behaviors or potential problems can be identified and corrected based on the results of the behavioral analysis. When the mobile device processor determines that the suspicious behaviors or potential problems can be identified and corrected based on the results of the behavioral analysis (i.e., determination block 508 = "Yes"), in block 518, the processor may initiate a process to correct the behavior and return to block 502 to perform additional coarse observations.

When the mobile device processor determines that the suspicious behaviors or potential problems cannot be identified and/or corrected based on the results of the behavioral analysis (i.e., determination block 508 = "No"), in determination block 509 the mobile device processor may determine whether there is a likelihood of a problem. In an aspect, the mobile device processor may determine that there is a likelihood of a problem by computing a probability of the mobile device encountering potential problems and/or engaging in suspicious behaviors, and determining whether the computed probability is greater than a predetermined threshold. When the mobile device processor determines that the computed probability is not greater than the predetermined threshold and/or there is not a likelihood that suspicious behaviors or potential problems exist and/or are detectable (i.e., determination block 509 = "No"), the processor may return to block 502 to perform additional coarse observations.

When the mobile device processor determines that there is a likelihood that suspicious behaviors or potential problems exist and/or are detectable (i.e., determination block 509 = "Yes"), in block 510, the mobile device processor may perform deeper logging on the identified subsystems, processes or applications. In block 512, the mobile device processor may perform deeper and more detailed observations on the identified subsystems, processes or applications based on the deeper logging. In block 514, the mobile device processor may perform further and/or deeper behavioral analysis based on the deeper and more detailed observations.

In determination block 508, the mobile device processor may again determine whether the suspicious behaviors or potential problems can be identified and corrected based on the results of the deeper behavioral analysis. When the mobile device processor determines that the suspicious behaviors or potential problems can not be identified and corrected based on the results of the deeper behavioral analysis (i.e., determination block 508 = "No"), the processor may repeat the operations in blocks 510-514 until the level of detail is fine enough to identify the problem or until it is determined that the problem cannot be identified with additional detail or that no problem exists.

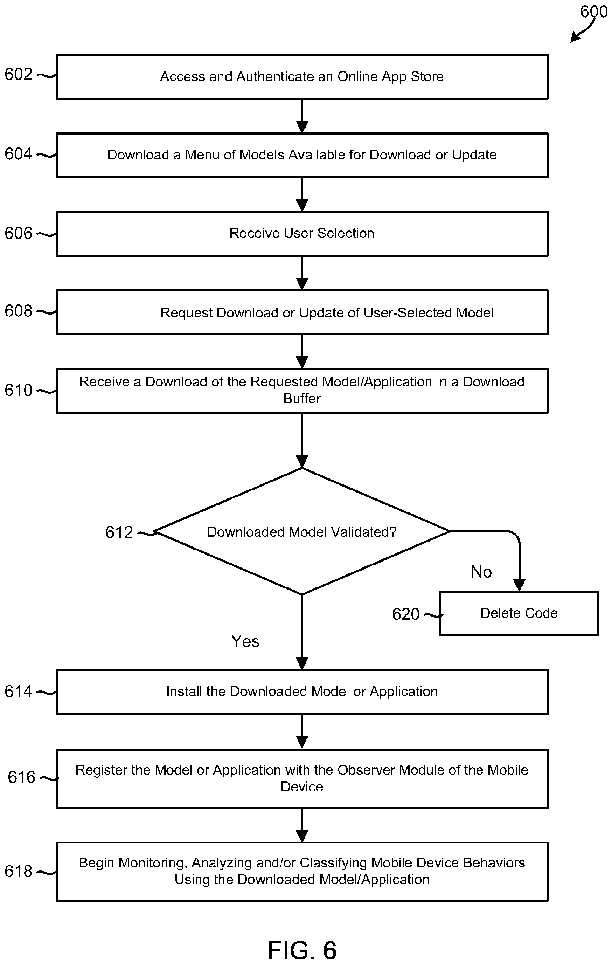

FIG. 6 illustrates an aspect method 600 for downloading a behavior observer/analyzer/classifier module or a behavior model to a mobile device from an application store. In block 602, the mobile device may access an online app store via a network, such as the Internet, in response to a user input. As part of block 602, the mobile device may also perform authentication routines to confirm that the accessed application store is indeed a trustworthy site, and not a source of malware or a server executing a man-in-the-middle attack. Such authentication processes may be particularly necessary for the various aspects in order to protect the mobile device from malware since the aspect models/applications are intended to protect the mobile device from performance-degrading behaviors and software. Signing the applications and data and verifying their signatures on the mobile device is one method which can be used for achieving trust.

Once the application store is authenticated, the mobile device may download a menu of models available for download or update and present the menu on a display of the mobile device in block 604. The mobile device may alternatively upload its configuration preferences to the application store. In block 606 the mobile device processor may receive a user selection input, and in block 608 send a download or update request to the application store based on the user's selection or device's pre-installed configuration.

In block 610, the mobile device processor may receive a download of the requested model or application and store the code in a buffer portion of memory. In determination block 612, the mobile device processor may perform software verification and validation processes on the downloaded code to determine whether has been accurately downloaded and has not been modified since it was validated by a trusted third party. Mechanisms for verifying and validating downloaded code are well known in the art and may be implemented in determination block 612. If the downloaded code is not verified or validated (i.e., determination block 612 = "No"), in block 620, the processor may delete the code from buffer memory.

If the downloaded code is verified and validated (i.e., determination block 612 = "Yes"), the processor may install the downloaded model or application in block 614. This installation process may involve copying the code from the buffer into a proper portion of memory for execution. This may also involve replacing a previously installed model or application, particularly in the case of an update. Alternatively, new behavioral rules may be appended to a pre-existing rule set. In block 616, the processor may complete the installation process by registering the model or application with the analyzer and/or classifier modules. As mentioned above, downloaded data, algorithms, and/or models may be installed in or linked to the analyzer and/or classifier modules in an install or update process so that when the analyzer and/or classifier modules perform real-time analysis operations they do so using the downloaded data, algorithms, and/or models. Once the installation process is complete, the process may begin monitoring, analyzing and/or classifying device behaviors using the downloaded model/application in block 618.

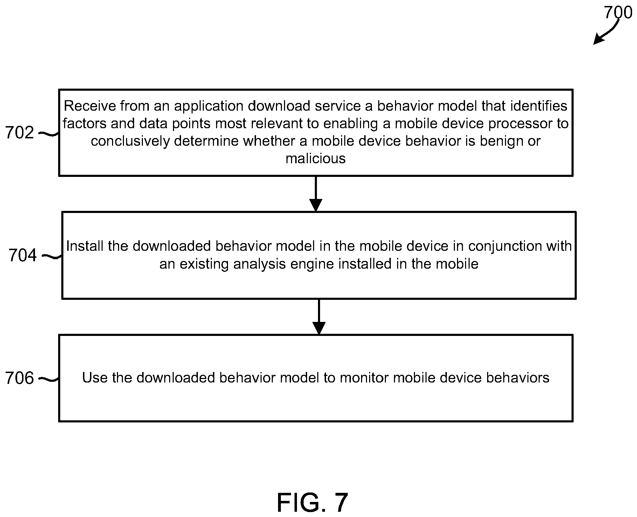

FIG. 7 illustrates an aspect method 700 for downloading and using behavior analysis models. In block 702, a processor of the mobile device may receive a behavior model from an application download service. The behavior model may identify the factors and data points determined to be most relevant to enabling the mobile device processor to better determine whether a mobile device behavior is benign or malicious.

In block 704, the mobile device processor may install the downloaded behavior model in the mobile device in conjunction with an existing analysis engine installed in the mobile device. In an embodiment, this may be achieved by accessing information stored by the API module, such as collaboration information and/or data-structures suitable for interpreting models received from the application download server. Such collaboration information/data-structures may include a dictionary database of the behavior features and grammar for interpreting, analyzing, combining, and/or applying the behavior models, and/or various representations (e.g. a finite state machine, a decision tree, etc.) that map the behavior features to a classification or analysis of the mobile device behaviors, applications or processes. In block 706, the mobile device processor may use the downloaded behavior model to monitor mobile device behaviors.

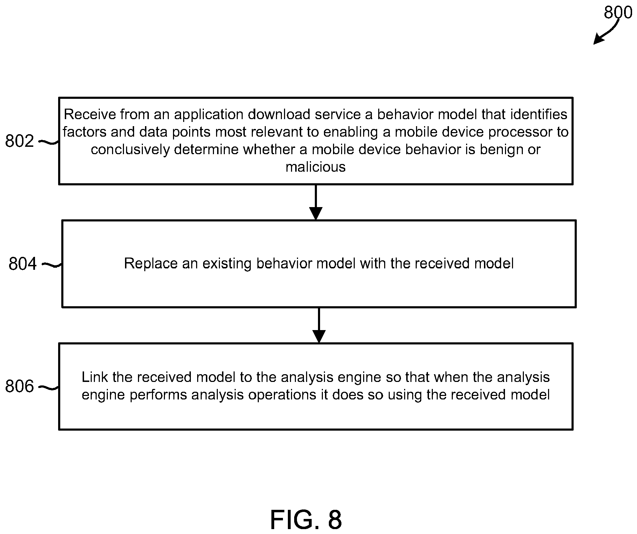

FIG. 8 illustrates an aspect mobile device method 800 for downloading and using a replacement behavior analysis module/application. In block 802, a processor of the mobile device may receive a behavior model from an application download service. The behavior model may identify the factors and data points determined to be most relevant to enabling the mobile device processor to better determine whether a mobile device behavior is benign or malicious. In block 804, the mobile device processor may replace an existing behavior model with the received model. In block 806, the mobile device processor may link the received model to the analysis engine so that when the analysis engine performs analysis operations, it does so using the received mode.

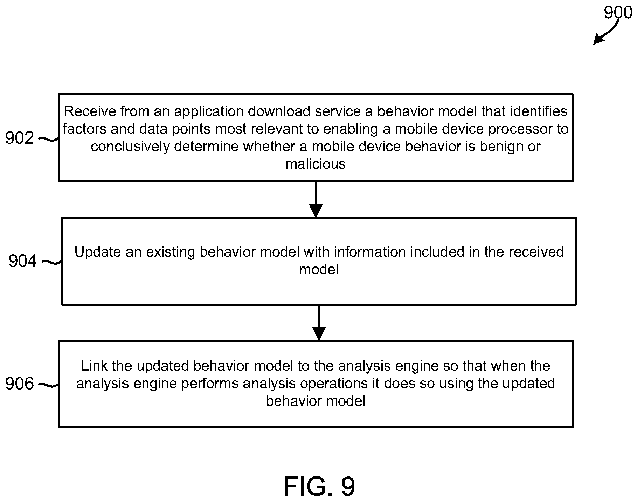

FIG. 9 illustrates an aspect mobile device method 900 for downloading a behavior analysis module/application from an application store to a mobile device. In block 902, a processor of the mobile device may receive a behavior model from an application download service. The behavior model may identify the factors and data points determined to be most relevant to enabling the mobile device processor to better determine whether a mobile device behavior is benign or malicious. In block 904, the mobile device processor may update all or portions of an existing behavior model with information included in the received model. In block 906, the mobile device processor may link the updated model to the analysis engine so that when the analysis engine performs analysis operations, it does so using the updated behavior model.

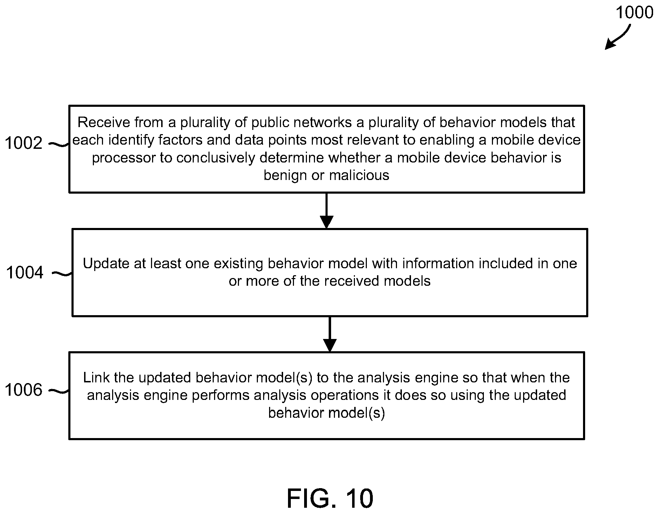

FIG. 10 illustrates an aspect method 1000 that may be implemented in a mobile device for downloading a plurality of behavior analysis modules/applications from a plurality of public networks. In block 1002, a processor of the mobile device may receive a plurality of behavior models from a plurality of public networks. Each behavior model may identify the factors and data points determined to be most relevant to enabling the mobile device processor to better determine whether a mobile device behavior is benign or malicious. In block 1004, the mobile device processor may update all or portions of one or more existing behavior models with information included in one or more of the received models. In block 1006, the mobile device processor may link the updated models to the analysis engine so that when the analysis engine performs analysis operations, it does so using the updated behavior models.

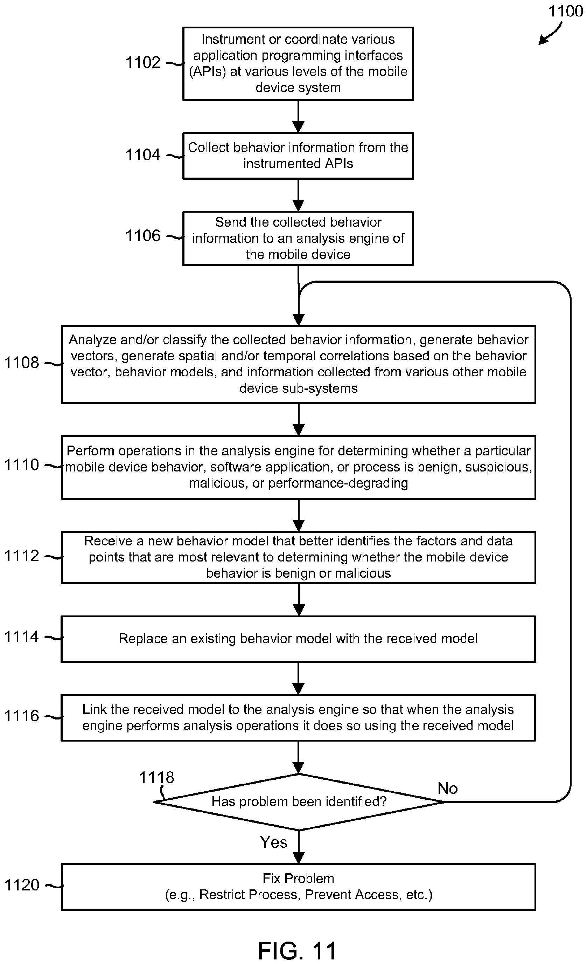

FIG. 11 illustrates an aspect method 1100 that may be implemented in a mobile device for performing behavior analysis operations using updated behavior models received from a public network. In block 1102, a processor in a mobile device may instrument or coordinate various APIs, registers, counters or other available information or components at various levels of the mobile device system. In block 1104, the mobile device processor may collect behavior information from the instrumented components. In block 1106, the mobile device processor may send (e.g., via a memory write operation, function call, etc.) the collected behavior information to the classifier module and/or the analyzer module (e.g., via a memory write operation, etc.) of the mobile device.

In block 1108, the mobile device processor may analyze and/or classify the collected behavior information, generate behavior vectors, generate spatial and/or temporal correlations based on the behavior vector, behavior models and information collected from various other mobile device sub-systems. In block 1110, the mobile device processor may begin performing various analysis operations to determine whether a particular mobile device behavior, software application, or process is benign, suspicious, malicious, or performance-degrading.

In block 1112, the mobile device processor may receive a new behavior model that better identifies the factors and data points that are most relevant to determining whether the mobile device behavior is benign or malicious. In block 1114, the mobile device processor may replace an existing behavior model with the received model. In block 1116, the mobile device processor may link the received model to the analysis engine. In determination block 1118, the mobile device may determine whether the mobile device behavior has been classified as being benign or malicious and/or whether a problem has been identified. If the mobile device processor determines that the problem has been identified (i.e., determination block 1118 = "Yes"), in block 1120, the mobile device processor may perform operations to fix the problem. If the mobile device processor determines that the problem has not been identified (i.e., determination block 1118 = "No"), the operations in blocks 1108-1116 may be repeated until the problem is identified.

The analyzer module and/or classifier module of the mobile device may be configured to perform real-time analysis operations, which may include performing, executing, and/or applying data, algorithms, and/or models to real time behavior information collected by the observer module to determine whether a mobile device behavior is benign, suspicious, malicious, or performance-degrading. The data, algorithms, and/or models applied by the analyzer and/or classifier modules may be pre-installed on the mobile device, generated on the mobile device, and/or downloaded from or upgraded by any number or combination of public and private cloud services/networks, including third party vendors and application stores. Downloaded data, algorithms, and/or models may be installed in or linked to the analyzer and/or classifier modules in an install or update process so that when the analyzer and/or classifier modules perform real-time analysis operations they do so using the downloaded data, algorithms, and/or models.

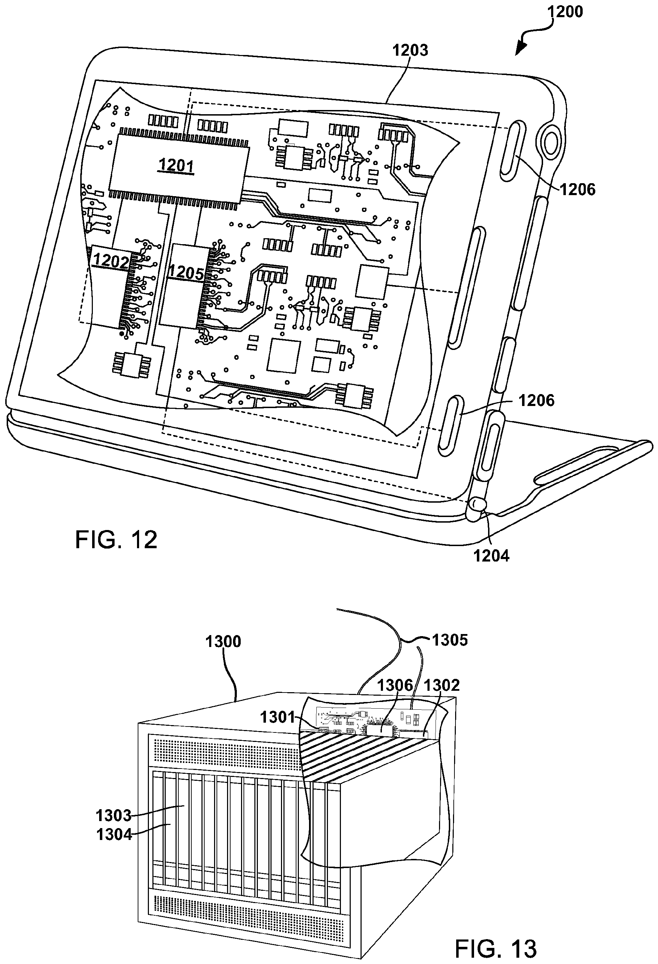

The various aspects may be implemented on a variety of mobile computing devices, an example of which is illustrated in FIG. 12 in the form of a smartphone. A smartphone 1202 may include a processor 1201 coupled to internal memory 1202, a display 1203, and to a speaker. Additionally, the smartphone 1202 may include an antenna 1204 for sending and receiving electromagnetic radiation that may be connected to a wireless data link and/or cellular telephone transceiver 1205 coupled to the processor 1201. Smartphones 1202 typically also include menu selection buttons or rocker switches 1206 for receiving user inputs.

A typical smartphone 1202 also includes a sound encoding/decoding (CODEC) circuit 1212, which digitizes sound received from a microphone into data packets suitable for wireless transmission and decodes received sound data packets to generate analog signals that are provided to the speaker to generate sound. Also, one or more of the processor 1201, wireless transceiver 1205 and CODEC 1212 may include a digital signal processor (DSP) circuit (not shown separately).

Portions of the aspect methods may be accomplished in a client-server architecture with some of the processing occurring in a server, such as maintaining databases of normal operational behaviors, which may be accessed by a mobile device processor while executing the aspect methods. Such aspects may be implemented on any of a variety of commercially available server devices, such as the server 1300 illustrated in FIG. 13. Such a server 1300 typically includes a processor 1301 coupled to volatile memory 1302 and a large capacity nonvolatile memory, such as a disk drive 1303. The server 1300 may also include a floppy disc drive, compact disc (CD) or DVD disc drive 1301 coupled to the processor 1301. The server 1300 may also include network access ports 1304 coupled to the processor 1301 for establishing data connections with a network 1305, such as a local area network coupled to other broadcast system computers and servers.

The processors 1201, 1301 may be any programmable microprocessor, microcomputer or multiple processor chip or chips that can be configured by software instructions (applications) to perform a variety of functions, including the functions of the various aspects described below. In some mobile devices, multiple processors 1201 may be provided, such as one processor dedicated to wireless communication functions and one processor dedicated to running other applications. Typically, software applications may be stored in the internal memory 1202, 1302, 1303 before they are accessed and loaded into the processor 1201, 1301. The processor 1201, 1301 may include internal memory sufficient to store the application software instructions.

Computer program code or "program code" for execution on a programmable processor for carrying out operations of the various aspects may be written in a high level programming language such as C, C++, C#, Smalltalk, Java, JavaScript, Visual Basic, a Structured Query Language (e.g., Transact-SQL), Perl, or in various other programming languages. Program code or programs stored on a computer readable storage medium as used in this application may refer to machine language code (such as object code) whose format is understandable by a processor.

Many mobile computing devices operating system kernels are organized into a user space (where non-privileged code runs) and a kernel space (where privileged code runs). This separation is of particular importance in Android® and other general public license (GPL) environments or open source environments where code that is part of the kernel space must be licensed, while code running in the user-space does not require such licensing. It should be understood that the various software components/modules discussed here may be implemented in either the kernel space or the user space, unless expressly stated otherwise.

The foregoing method descriptions and the process flow diagrams are provided merely as illustrative examples and are not intended to require or imply that the steps of the various aspects must be performed in the order presented. As will be appreciated by one of skill in the art the order of steps in the foregoing aspects may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

As used in this application, the terms "component," "module," "system," "engine," "generator," "manager" and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a computing device and the computing device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known network, computer, processor, and/or process related communication methodologies.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a multiprocessor, but, in the alternative, the processor may be any conventional processor, controller, microcontroller, or state machine. A processor may also be implemented as a combination of computing devices, e.g., a combination of a DSP, GPU and a multiprocessor, a plurality of multiprocessors, one or more multiprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

## Claims

1. A method (700) for monitoring mobile device behaviors in a mobile device, comprising:
receiving (702) in a mobile device processor a behavior model from an application download service, the received behavior model including an initial feature set identifying factors and data points most relevant to enabling the mobile device processor to better determine whether a mobile device behavior is benign;
installing (704) the received behavior model in the mobile device in conjunction with an existing behavior analyzer engine installed in the mobile device; and
using (706) the installed behavior model to monitor one or more mobile device behaviors; further comprising:
dynamically determining suspicious behaviors to observe in greater detail;
recursively increasing the granularity of the observations and collecting additional behavior information if it is determined that a behavior is suspicious; and
applying behavior models including progressively larger feature sets.

2. The method of claim 1, wherein receiving the behavior model comprises receiving a software application.

3. The method of claim 1, wherein receiving the behavior model comprises receiving an a file selected from the group comprising XML, JSON, YAML and HTML/XHTML that identifies factors and data points most relevant to enabling the mobile device processor to better determine whether a mobile device behavior is benign.

4. The method of claim 1, wherein receiving the behavior model comprises receiving a finite state machine representation that includes a mapping of features to behavior classifications.

5. The method of claim 1, further comprising:
replacing (804) an existing behavior model with the received behavior model; and
linking (806) the received behavior model to the existing behavior analyzer engine so that when the existing behavior analyzer engine performs analysis operations it does so using the received behavior model.

6. The method of claim 1, further comprising:
updating (904) an existing behavior model with information included in the received behavior model; and
linking (906) the updated behavior model to the existing behavior analyzer engine so that when the existing behavior analyzer engine performs analysis operations it does so using the updated behavior model.

7. The method of claim 1, further comprising:
receiving (1002) a plurality of behavior models from a plurality of public networks; and
updating (1004) at least one existing behavior model with information included in one or more of the received plurality of behavior models.

8. A mobile computing device comprising:
a mobile device processor;
means for receiving a behavior model from an application download service, the received behavior model including an initial feature set identifying factors and data points most relevant to enabling the mobile device processor to better determine whether a mobile device behavior is benign;
means for installing the received behavior model in conjunction with an existing behavior analyzer engine; and
means for using the installed behavior model to monitor one or more mobile device behaviors; further comprising:
means for dynamically determining suspicious behaviors to observe in greater detail;
means for recursively increasing the granularity of the observations and collecting additional behavior information if it is determined that a behavior is suspicious; and
means for applying behavior models including progressively larger feature sets.

9. The mobile computing device of claim 8, wherein means for receiving the behavior model comprises means for receiving a software application.

10. The mobile computing device of claim 8, wherein means for receiving the behavior model comprises means for receiving an XML file that identifies factors and data points most relevant to enabling the mobile device processor to better determine whether a mobile device behavior is benign.

11. The mobile computing device of claim 8, wherein means for receiving the behavior model comprises means for receiving a finite state machine representation that includes a mapping of features to behavior classifications.

12. The mobile computing device of claim 8, further comprising:
means for replacing an existing behavior model with the received behavior model; and
means for linking the received behavior model to the existing behavior analyzer engine so that when the existing behavior analyzer engine performs analysis operations it does so using the received behavior model.

13. The mobile computing device of claim 8, further comprising:
means for updating an existing behavior model with information included in the received behavior model; and
means for linking the updated behavior model to the existing behavior analyzer engine so that when the existing behavior analyzer engine performs analysis operations it does so using the updated behavior model.

14. The mobile computing device of claim 8, further comprising:
means for receiving a plurality of behavior models from a plurality of public networks; and
means for updating at least one existing behavior model with information included in one or more of the received plurality of behavior models.

15. A computer program comprising instructions for carrying out a method according to any of claims 1 to 7 when run on a computer.

## Patentansprüche

1. Verfahren (700) zum Überwachen von Mobilgerät-Verhalten in einem Mobilgerät, umfassend:
Empfangen (702) eines Verhaltensmodells von einem Anwendungs-Download-Dienst in einem Prozessor des Mobilgeräts, wobei das empfangene Verhaltensmodell einen anfänglichen Merkmalssatz enthält, der Faktoren und Datenpunkte identifiziert, die am relevantesten sind, um dem Prozessor des Mobilgeräts zu ermöglichen, besser zu bestimmen, ob eine Verhaltensweise des Mobilgeräts unschädlich ist;
Installieren (704) des empfangenen Verhaltensmodells in dem Mobilgerät in Verbindung mit einer vorhandenen, in dem Mobilgerät installierten Verhalten-Analysemaschine; und
Verwenden (706) des installierten Verhaltensmodells zur Überwachung eines oder mehrerer Verhalten des Mobilgeräts; ferner umfassend:
dynamisches Bestimmen verdächtiger Verhalten, die genauer zu beobachten sind;
rekursives Erhöhen der Granularität der Beobachtungen und Sammeln zusätzlicher Verhalten-Informationen, wenn festgestellt wird, dass eine Verhaltensweise verdächtig ist; und
Anwenden von Verhaltensmodellen, die progressiv größere Merkmalssätze enthalten.

2. Verfahren nach Anspruch 1, wobei das Empfangen des Verhaltensmodells Empfangen einer Softwareanwendung ausweist.

3. Verfahren nach Anspruch 1, wobei das Empfangen des Verhaltensmodells Empfangen einer Datei aufweist, die aus der Gruppe ausgewählt ist, die XML, JSON, YAML und HTML/XHTML umfasst, die Faktoren und Datenpunkte identifiziert, die am relevantesten sind, um den Prozessor des Mobilgeräts in die Lage zu versetzen, besser zu bestimmen, ob eine Verhaltensweise des Mobilgeräts unschädlich ist.

4. Verfahren nach Anspruch 1, wobei das Empfangen des Verhaltensmodells das Empfangen einer Darstellung eines endlichen Zustandsautomaten umfasst, die eine Abbildung von Merkmalen auf Verhalten-Klassifikationen umfasst.

5. Verfahren nach Anspruch 1, ferner aufweisend:
Ersetzen (804) eines bestehenden Verhaltensmodells durch das empfangene Verhaltensmodell; und
Verknüpfen (806) des empfangenen Verhaltensmodells mit der vorhandenen Verhaltensanalyse-Engine, so dass die vorhandene Verhaltensanalyse-Engine, wenn sie Analysevorgänge durchführt, dies unter Verwendung des empfangenen Verhaltensmodells tut.

6. Verfahren nach Anspruch 1, ferner aufweisend:
Aktualisieren (904) eines vorhandenen Verhaltensmodells mit Informationen, die im empfangenen Verhaltensmodell enthalten sind; und
Verknüpfen (906) des aktualisierten Verhaltensmodells mit der vorhandenen Verhaltensanalyse-Engine, so dass die vorhandene Verhaltensanalyse-Engine, wenn sie Analysevorgänge durchführt, dies unter Verwendung des aktualisierten Verhaltensmodells tut.

7. Verfahren nach Anspruch 1, ferner aufweisend:
Empfangen (1002) einer Vielzahl von Verhaltensmodellen von einer Vielzahl von öffentlichen Netzwerken; und
Aktualisieren (1004) mindestens eines bestehenden Verhaltensmodells mit Informationen, die in einem oder mehreren der empfangenen Vielzahl von Verhaltensmodellen enthalten sind.

8. Mobile Computervorrichtung, umfassend:
einen Prozessor für ein Mobilgerät;
Mittel zum Empfangen eines Verhaltensmodells von einem Anwendungs-Download-Dienst, wobei das empfangene Verhaltensmodell einen anfänglichen Merkmalssatz enthält, der Faktoren und Datenpunkte identifiziert, die am relevantesten sind, um dem Prozessor des Mobilgeräts zu ermöglichen, besser zu bestimmen, ob eine Verhaltensweise des Mobilgeräts unschädlich ist;
Mittel zum Installieren des empfangenen Verhaltensmodells in Verbindung mit einer vorhandenen Verhaltensanalysator-Engine; und
Mittel zur Verwendung des installierten Verhaltensmodells zur Überwachung einer oder mehrerer Verhalten des Mobilgeräts; ferner umfassend:
Mittel zum dynamischen Bestimmen verdächtiger Verhalten, die genauer zu beobachten sind;
Mittel zum rekursiven Erhöhen der Granularität der Beobachtungen und zum Sammeln zusätzlicher Verhalten-Informationen, wenn festgestellt wird, dass eine Verhaltensweise verdächtig ist; und
Mittel zum Anwenden von Verhaltensmodellen, die progressiv größere Merkmalssätze enthalten.

9. Mobile Computervorrichtung nach Anspruch 8, wobei das Mittel zum Empfangen des Verhaltensmodells Mittel zum Empfangen einer Softwareanwendung umfassen.

10. Mobile Computervorrichtung nach Anspruch 8, wobei das Mittel zum Empfangen des Verhaltensmodells Mittel zum Empfangen einer XML-Datei umfassen, die Faktoren und Datenpunkte identifiziert, die am relevantesten sind, um den Prozessor des Mobilgeräts in die Lage zu versetzen, besser zu bestimmen, ob eine Verhaltensweise des Mobilgeräts unschädlich ist.

11. Mobile Computervorrichtung nach Anspruch 8, wobei das Mittel zum Empfangen des Verhaltensmodells Mittel zum Empfangen einer Darstellung eines endlichen Zustandsautomaten umfassen, die eine Abbildung von Merkmalen auf Verhalten-Klassifikationen umfasst.

12. Mobile Computervorrichtung nach Anspruch 8, ferner aufweisend:
Mittel zum Ersetzen eines bestehenden Verhaltensmodells durch das empfangene Verhaltensmodell; und
Mittel zum Verknüpfen des empfangenen Verhaltensmodells mit der vorhandenen Verhaltensanalyse-Engine, so dass die vorhandene Verhaltensanalyse-Engine, wenn sie Analysevorgänge durchführt, dies unter Verwendung des empfangenen Verhaltensmodells tut.

13. Mobile Computervorrichtung nach Anspruch 8, ferner aufweisend:
Mittel zum Aktualisieren eines bestehenden Verhaltensmodells mit Informationen, die in dem empfangenen Verhaltensmodell enthalten sind; und
Mittel zum Verknüpfen des aktualisierten Verhaltensmodells mit der vorhandenen Verhaltensanalyse-Engine, so dass die vorhandene Verhaltensanalyse-Engine, wenn sie Analysevorgänge durchführt, dies unter Verwendung des aktualisierten Verhaltensmodells tut.

14. Computervorrichtung nach Anspruch 8, ferner aufweisend:
Mittel zum Empfangen einer Vielzahl von Verhaltensmodellen von einer Vielzahl von öffentlichen Netzwerken; und
Mittel zum Aktualisieren mindestens eines bestehenden Verhaltensmodells mit Informationen, die in einem oder mehreren der empfangenen Vielzahl von Verhaltensmodellen enthalten sind.

15. Computerprogramm mit Anweisungen zur Ausführung eines Verfahrens nach einem der Ansprüche 1 bis 7, wenn es auf einem Computer ausgeführt wird.

## Revendications

1. Un procédé (700) de surveillance, dans un dispositif mobile, des comportements du dispositif mobile, comprenant :
la réception (702), dans un processeur de dispositif mobile, d'un modèle de comportement à partir d'un service de téléchargement d'application, le modèle de comportement reçu incluant un ensemble initial de caractéristiques identifiant les facteurs et les points de données les plus pertinents pour permettre au processeur du dispositif mobile de mieux déterminer si un comportement du dispositif mobile est ou non bénin ;
l'installation (704) du modèle de comportement reçu dans le dispositif mobile en combinaison avec un moteur d'analyseur de comportement existant installé dans le dispositif mobile ; et
l'utilisation (706) du modèle de comportement installé pour surveiller un ou plusieurs comportements de dispositif mobile ; comprenant en outre :
la détermination dynamique de comportements suspects à observer plus en détail ;
l'augmentation récursive de la granularité des observations et la collecte d'une information de comportement supplémentaire s'il est déterminé qu'un comportement est suspect ; et
l'application de modèles de comportement incluant des ensembles de caractéristiques progressivement plus grands.

2. Le procédé selon la revendication 1, dans lequel la réception du modèle de comportement comprend la réception d'une application logicielle.

3. Le procédé selon la revendication 1, dans lequel la réception du modèle de comportement comprend la réception d'un fichier sélectionné parmi le groupe comprenant XML, JSON, YAML et HTML/XHTML, qui identifie les facteurs et les points de données les plus pertinents pour permettre au processeur du dispositif mobile de mieux déterminer si un comportement du dispositif mobile est ou non bénin.

4. Le procédé selon la revendication 1, dans lequel la réception du modèle de comportement comprend la réception d'une représentation de machine à états finis qui inclut une mise en correspondance des caractéristiques avec des classifications de comportement.

5. Le procédé selon la revendication 1, comprenant en outre :
le remplacement (804) d'un modèle de comportement existant par le modèle de comportement reçu ; et
la liaison (806) du modèle de comportement reçu au moteur d'analyseur de comportement existant de sorte que, lorsque le moteur d'analyseur de comportement existant réalise des opérations d'analyse, il les réalise à l'aide du modèle de comportement reçu.

6. Le procédé selon la revendication 1, comprenant en outre :
la mise à jour (904) d'un modèle de comportement existant par une information incluse dans le modèle de comportement reçu ; et
la liaison (906) du modèle de comportement mis à jour au moteur d'analyseur de comportement existant de sorte que, lorsque le moteur d'analyseur de comportement existant réalise des opérations d'analyse, il les réalise à l'aide du modèle de comportement mis à jour.

7. Le procédé selon la revendication 1, comprenant en outre :
la réception (1002) d'une pluralité de modèles de comportement à partir d'une pluralité de réseaux publics ; et
la mise à jour (1004) d'au moins un modèle de comportement existant par une information incluse dans un ou plusieurs modèles de la pluralité reçue de modèles de comportement.

8. Un dispositif informatique mobile comprenant :
un processeur de dispositif mobile ;
un moyen pour la réception d'un modèle de comportement à partir d'un service de téléchargement d'application, le modèle de comportement reçu incluant un ensemble initial de caractéristiques identifiant les facteurs et les points de données les plus pertinents pour permettre au processeur du dispositif mobile de mieux déterminer si un comportement du dispositif mobile est ou non bénin ;
un moyen pour l'installation du modèle de comportement reçu en combinaison avec un moteur d'analyseur de comportement existant ; et
un moyen pour l'utilisation du modèle de comportement installé pour surveiller un ou plusieurs comportements de dispositif mobile ; comprenant en outre :
un moyen pour la détermination dynamique de comportements suspects à observer plus en détail ;
un moyen pour l'augmentation récursive de la granularité des observations et la collecte d'une information de comportement supplémentaire s'il est déterminé qu'un comportement est suspect ; et
un moyen pour l'application de modèles de comportement incluant des ensembles de caractéristiques progressivement plus grands.

9. Le dispositif informatique mobile selon la revendication 8, dans lequel un moyen pour la réception du modèle de comportement comprend un moyen pour la réception d'une application logicielle.

10. Le dispositif informatique mobile selon la revendication 8, dans lequel un moyen pour la réception du modèle de comportement comprend un moyen pour la réception d'un fichier XML qui identifie les facteurs et les points de données les plus pertinents pour permettre au processeur du dispositif mobile de mieux déterminer si un comportement du dispositif mobile est ou non bénin.

11. Le dispositif informatique mobile selon la revendication 8, dans lequel un moyen pour la réception du modèle de comportement comprend un moyen pour la réception d'une représentation de machine à états finis qui inclut une mise en correspondance des caractéristiques avec des classifications de comportement.

12. Le dispositif informatique mobile selon la revendication 8, comprenant en outre :
un moyen pour le remplacement d'un modèle de comportement existant par le modèle de comportement reçu ; et
un moyen pour la liaison du modèle de comportement reçu au moteur d'analyseur de comportement existant de sorte que, lorsque le moteur d'analyseur de comportement existant réalise des opérations d'analyse, il les réalise à l'aide du modèle de comportement reçu.

13. Le dispositif informatique mobile selon la revendication 8, comprenant en outre :
un moyen pour la mise à jour d'un modèle de comportement existant par une information incluse dans le modèle de comportement reçu ; et
un moyen pour la liaison du modèle de comportement mis à jour au moteur d'analyseur de comportement existant de sorte que, lorsque le moteur d'analyseur de comportement existant réalise des opérations d'analyse, il les réalise à l'aide du modèle de comportement mis à jour.

14. Le dispositif informatique mobile selon la revendication 8, comprenant en outre :
un moyen pour la réception d'une pluralité de modèles de comportement à partir d'une pluralité de réseaux publics ; et
un moyen pour la mise à jour d'au moins un modèle de comportement existant par une information incluse dans un ou plusieurs modèles de la pluralité reçue de modèles de comportement.

15. Un programme d'ordinateur comprenant des instructions pour mettre en œuvre un procédé selon l'une des revendications 1 à 7 lorsqu'il tourne sur un ordinateur.
